# EUROPÄISCHE PATENTANMELDUNG

(11) **EP 4 501 721 A2**
(43) Veröffentlichungstag der Anmeldung: **05.02.2025**
(21) Anmeldenummer: 24189574.7
(22) Anmeldetag: 20.12.2019
(51) Int. Cl.: B60T 13/66

(54) **REDUNDANTES BREMSSYSTEM MIT 2 DRUCKVERSORGUNGEN FÜR ELEKTROFAHRZEUG UND FAHRZUEUGE MIT AUTONOMEM FAHREN DER STUFE 3 (HAD) BIS STUFE 5 (AD)**

(30) Priorität: 20.12.2018 DE 102018133189; 10.07.2019 DE 202019107191 U; 30.08.2019 DE 202019107193 U
(62) Teilanmeldung aus: 22198126.9
(71) Anmelder: IPGATE AG, 8808 Pfäffikon SZ (CH)
(72) Erfinder: Leiber, Thomas, 22203 Rogoznica (HR) (HR)
(74) Vertreter: Felber, Josef

(57) **Zusammenfassung**

Die Erfindung betrifft ein Bremssystem für ein Fahrzeug, folgende Komponenten aufweisend: mindestens zwei hydraulisch wirkende Radbremsen (RB1, RB2, RB3, RB4); mindestens zwei Druckversorgungseinrichtungen (DV1, DV2), die jeweils von einem elektromotorischen Antrieb (M1, M2) angetrieben sind und jeweils eine elektronische Steuer- und Regeleinheit (DV1-ECU, DV2-ECU) aufweisen, wobei optional die mindestens zwei Druckversorgungseinrichtungen (DV1, DV2) in einer Einheit integriert sind; und mindestens eine übergeordnete zentrale Steuereinheit (M-ECU), die die einzelnen Steuer- und Regeleinheiten (DV1-ECU, DV2-ECU) der Komponenten des Bremssystems steuert; wobei das Bremssystem ferner mindestens einen elektrischen Antriebsmotor (TM1, TM2) zum Antrieb und Abbremsen einer Achse oder eines Rades umfasst, wobei die übergeordnete zentrale Steuereinheit (M-ECU) dazu eingerichtet ist, den elektrischen Antriebsmotor (TM1, TM2) so anzusteuern, dass mittels des Antriebsmotors (TM1, TM2) eine unterstützende Bremskraft erzeugt wird; und/oder das Bremssystem ferner mindestens einen elektrischen Antriebsmotor (TM1, TM2) zum Antrieb und Abbremsen einer Achse oder eines Rades umfasst, wobei die übergeordnete zentrale Steuereinheit (M-ECU) dazu eingerichtet ist, den elektrischen Antriebsmotor (TM1, TM2) so anzusteuern, dass bei zumindest teilweisem Ausfall einer Komponente des Bremssystems, etwa einer der Druckversorgungseinrichtungen (DV1, DV2), eine unterstützende Bremskraft mittels des Antriebsmotors (TM1, TM2) erzeugt wird; und/oder die übergeordnete zentrale Steuereinheit (M-ECU) dazu eingerichtet ist, Magnetventile der Druckversorgungseinrichtungen (DV1, DV2) für radindividuelle Bremsmomenteingriffe anzusteuern und/oder eine Lenkung (EPS) mindestens einer Fahrzeugachse anzusteuern, und/oderdie übergeordnete zentrale Steuereinheit (M-ECU) dazu eingerichtet ist, eine Dämpfung und/oder eine Wankstabilisierung des Fahrzeuges anzusteuern.

## Beschreibung

Die vorliegende Erfindung betrifft eine Vorrichtung für ein hydraulisches Betätigungssystem für eine Bremse für Elektrofahrzeuge und insbesondere Fahrzeuge mit hochautomatisiertem, vollautomatisiertem oder autonomem Fahren

### Stand der Technik

Die Automobilindustrie befindet sich in einem disruptiven Veränderungsprozess. Neben der zunehmenden Marktdurchdringung von Elektrofahrzeugen werden verschiedene Stufen des automatisierten Fahrens durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Bremssysteme steigen. Hierdurch wurde die Entwicklung von neuen Bremssystemen vorangetrieben.

Die Ablösung von Vakuumbremskraftverstärkern durch elektrische Bremskraftverstärker (e-BKV) begann 2005 nach ersten Lösungsansätzen [ATZ Ausgabe 6/11] mit der Markteinführung von sog. 2-Box-Lösungen mit elektrischen Folgebremskraftverstärkern und zusätzlicher ESP-Einheit im Jahr 2013 [ATZ-Ausgabe 4/18], zeitnah gefolgt durch erste integrierte 1-Box Systeme mit Pedalsimulator im Jahr 2017 [Bremsenhandbuch - Kapitel 20]. Aktuell werden Lösungen für die Stufe 3 (HAD) entwickelt.

Ab Stufe 3 (HAD) ist eine redundante Druckversorgung erstmalig zwingend erforderlich. Zudem ist eine Verbindung der Bremskreise mit den Vorratsbehälter bei offenen Bremssystemen weitestgehend zu vermeiden und Pedalgefühlsimulatoren mit konstanter Pedalcharakteristik einzusetzen. Weiter muss auch eine Redundanz der ABS-Funktion bereitgestellt werden. Dies wird bei sog. 2-Box-Systemen mit elektrischem Bremskraftverstärker und ESP/ABS-Aggregat gemäß Stand der Technik gemäß DE112009005541B3 derart realisiert, dass der elektrische Bremskraftverstärker (e-BKV) eine Druckmodulations-Funktion bei Ausfall des ESP-Aggregates übernimmt, um stets eine hohe Fahrzeugverzögerung zu gewährleisten. Hier wurde im ersten Schritt eine sog. "ABS select-low Regelung" eingeführt.

Ab Stufe 4 (FAD) werden für ausreichende Systemverfügbarkeit 3-fach Redundanzen erwartet, z.B. **bei den Pedalsensoren mit der Regel "2 aus 3"**. **Zudem** ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Zur Überwachung der Druckversorgung ist ein redundanter Druckgeber vorzusehen bzw. eine alternative Diagnosemöglichkeit vorzusehen. Weiter wird eine redundante ABS-Funktion mit zumindest achsindividueller Regelung gefordert werden und es werden Teilredundanzen eingeführt. Bremssysteme mit geschlossenen Bremskreisen im ABS-Betrieb haben Sicherheitsvorteile.

In Stufe 5 (AD) sind Pedalweggeber und Pedalsimulator sowie deren Charakteristik nicht mehr relevant. Dagegen werden die restlichen Komponenten und Teilsysteme eine 3-**fach Redundanz, mit der Regel "2 aus 3" bei Sensoren,** Steuer- und Regeleinheiten ECU und Teil-ECU, oder mehrfach Redundanz, aufweisen. Zudem ist eine vollkommene Redundanz für die radindividuelle Regelung vorzusehen.

Mehrere neue Fahrzeughersteller wie z.B. Apple, Uber oder Waymo arbeiten an komplett autonom fahrenden Fahrzeugen ohne Fahrer, die in der ersten Ausbaustufe ein Bremspedal mit einfacher Pedalgefühlsimulatoreinheit aufweisen (Stufe 4 FAD) und in der letzten Ausbaustufe (Stufe 5 AD) kein Bremspedal mehr haben sollen. Zudem setzen sich Fahrzeuge mit starken elektrischen Antriebsmotoren, sowohl an der Hinterachse als auch an der Vorderachse, zunehmend durch.

Neben den beschriebenen elektrohydraulischen Bremssystemen gibt es die elektromechanische Bremse (EMB, elektromechanische Keilbremse) als bekannten Lösungsansatz. Die EMB hat sich in der Vergangenheit aufgrund von Sicherheitsbedenken und hohen Kosten nicht durchgesetzt. Die hohen Kosten sind insbesondere darin begründet, dass für jede Radbremse ein Elektromotor sowie ein aufwändiger elektromechanischer Mechanismus erforderlich ist. Zudem hat eine EMB sehr viele elektrische Kontaktstellen, die bekanntlich fehleranfälliger als hydraulische Leitungen sind.

Bremssysteme für die Stufen FAD und AD können aus Kosten- und Zuverlässigkeitsgründen nicht ausschließlich EMB oder Keilbremsen aufweisen. Eine EMB ist nur für die Hinterachse eines Fahrzeuges geeignet, weil die Hinterachse geringeren Anteil an der Bremskraft hat und ein Ausfall nicht so kritisch betrachtet wird wie an der Vorderachse. So ist ein hydraulisches Bremssystem mit Regelung im vorwiegenden geschlossenen Bremskreis über eine elektrische angetriebene Kolben-Zylinder-Einheit zu präferieren.

In DE102005055751B4 und DE102005018649B4 ist die hochpräzise Kolbendruckregelung (PPC = Piston Pressure Control) mittels einer elektrisch angetriebenen Kolben-Zylinder-Einheit mit Spindeltrieb ausgeführt. Der Druck wird unter Verwendung eines nicht-linearen Kennfeldes, der sog. Druck-Volumen-Kennlinie, gesteuert, in dem der Zusammenhang zwischen Druck und Kolbenposition ausgewertet wird. Alternativ oder ergänzend wird der Druck durch Phasenstromsteuerung des Elektromotors genutzt, wobei der physikalische Zusammenhang der Proportionalität zwischen Strom zu Drehmoment und aufgrund einer bekannten Kolbenfläche und festen Getriebeübersetzung, auch Proportionalität zwischen Strom und Druck besteht und genutzt wird. Mit diesen beiden Kenngrößen kann der Druck und der Drückänderungsverlauf sehr genau geregelt werden.

In EP1874602B1 und EP2396202B1 ist das sog. Multiplex-Verfahren (MUX) beschrieben, das sich besonders für die Anforderungen der Stufe 4 und 5 eignet, da ein geschlossenes Bremssystem, wie später ausgeführt, keine schlafenden Fehler aufweist. Zudem können mehrere Radbremsen mit nur je einem Schaltventil gleichzeitig oder nacheinander im Druck auf- und abgebaut werden. Nachteilig sind die hohen Dynamikanforderungen an den Elektromotor, insbesondere wenn alle Radbremsen mit einem Motor geregelt werden. Dies erfordert einen speziellen Motor mit doppeltem Luftspalt wie er z.B. aus EP 1759447B1 bekannt ist oder einen Motor mit sehr geringer Trägheitsmasse.

In WO201614622A2 ist zudem eine spezielle Ventilschaltung von Schaltventilen ausgeführt, wo der Innenraum des Schaltventils über eine Hydraulikleitung mit dem zugehörigen Bremskreis und der Ventilsitzausgleich über eine Hydraulikleitung mit der zugehörigen Radbremse verbunden ist. Diese Ventilschaltung ist insbesondere für das MUX-Verfahren mit nur einem Schaltventil pro Bremskreis geeignet, da sich im Fehlerfall das Magnetventil durch den Druck in der Radbremse öffnet und damit verhindert, dass der Druck in der Radbremse eingesperrt bleibt, was zur ungewollten Fahrzeugverzögerung führt.

Aus EP3271221A2 ist ein weiterentwickeltes MUX-Verfahren (MUX 2.0) mit nur einem Auslassventil je Bremskreis bekannt. Damit können die Dynamikanforderungen für den Multiplex-Betrieb deutlich reduziert werden, weil Druck auch über Auslassventile in Situationen mit extrem hohen Druckänderungsdynamikanforderungen abgebaut werden kann und das Bremssystem im Normalbetrieb im geschlossenen Bremskreis betrieben wird. Hierdurch können die Dynamikanforderungen an den Elektromotor deutlich reduziert werden bzw. eine sehr gute Regelung im Multiplex-Verfahren erreicht werden.

Aus WO2012059175A1 ist eine vorteilhafte Betätigungseinheit (BE) mit zwei Wegsensoren und dazwischen wirkendem elastischem Element bekannt, womit Differenzwege und/oder Differenzkräfte gemessen und von der Steuerung des Bremssystems verwertet werden. Ein Bremssystem mit einer derartigen Betätigungseinheit, ergänzt um einen Pedalgefühlsimulator, erfordert Anforderungen an Mehrfachredundanzen der Stufe 3 bis Stufe 5.

Bestimmte Komponenten von Bremssystemen sind als sicherheitskritisch zu betrachten. Dies sind Dichtungen von Kolben, Magnetventile und Kugelgewindetrieb. Nachfolgend sind verschiedene Fehler und deren Auswirkungen aufgeführt:
- Kolben: Kolbendichtungen können ausfallen, wobei die Undichtigkeit z.B. nicht bei kleinen Drücken, sondern erst bei hohem Drücken auftreten können. Eine Undichtigkeit führt zu einem Ausfall der Kolbenfunktion. Kolben werden in Wegsimulatoren, Druckversorgungen und Hauptbremszylindern (HZ) eingesetzt und können zu Pedaldurchfall bzw. Ausfall der Druckversorgung führen.
- Magnetventile: Schmutzpartikel können sich im Ventilsitz absetzen. Wenn Magnetventile in einem offenen Bremssystem z.B. mit dem Vorratsbehälter verbunden sind, können sich bei Schließvorgang Partikel absetzen und die Verbindung ist nicht dicht. Die Dichtigkeit kann im geöffneten Zustand nicht diagnostiziert werden.
- Kugel-Gewinde-Trieb: Kugel-Gewinde-Triebe verschleißen über Lebensdauer und können klemmen, insbesondere wenn Schmutzpartikel in den Kugel-Gewinde-Trieb gelangen. Dies kann zu Ausfällen der Druckversorgung führen.

Die Anforderungen für Bremssysteme der Stufe 3 (HAD), Stufe 4 (FAD) und Stufe 5 (AD) und bei E-Fahrzeugen, die zunehmend starke elektrische Antriebsmotoren an einer oder mehreren Achsen aufweisen, lassen sich wie folgt zusammenfassen:
- absolut geräuschloser Betrieb, d.h. keine störenden Geräusche von Aggregaten an der Spritzwand;
- noch kürzere Bauweise als bei konventionellen PKWs aufgrund neuer Fahrzeug-Plattformkonzepten bei E-Fahrzeugen;
- Radindividueller oder achsindividueller Bremseingriff, auch bei Komplett- oder Teilausfall von Modulen;
- Funktionsumfang ABS, ESP, ASR, Rekuperation und Torque Vectoring mit möglichst geringer Einschränkung der Leistungsfähigkeit auch bei Komplett- oder Teilausfall von Modulen;
- Maximale Rekuperation der kinetischen Energie des Fahrzeuges durch maximale Ausnutzung der Bremsleistung durch Elektromotoren; daher dynamische und genaue bedarfsgerechte Steuerung des hydraulischen Bremssystems;
- Nutzung von verfügbaren Bremsmomenten, z.B. von Antriebsmotoren für Vereinfachung der Bremssysteme bzw. Verkürzung des Bremsweges;
- Verstärkte Sicherheit durch Redundanz der Systeme, Signalübertragungen und Stromversorgung;
- Diagnoseverfahren zur Erkennung von Leckagen bzw. Vermeidung schlafender Fehler;
- hohe Anforderungen an die Regelgenauigkeit zur weiteren Bremswegverkürzung, insbesondere beim gemeinsamen Wirken von elektrischen Antriebsmotoren und hydraulischen Bremsmomenten;
- hohe Modularität der Systeme, d.h. der Verwendung von gleichen Teilen/Modulen, insbesondere bei der Druckversorgung; Modularität ist getrieben durch eine Vielzahl an Fahrzeugantriebskonzepten, insbesondere in einer Koexistenz von Fahrzeugen mit Verbrennungsmotoren, Hybridfahrzeugen und reinen E-Fahrzeugen (Verbrennungsmotoren, Hybridmotoren, reine E-Fahrzeuge, fahrerlose Fahrzeuge).

### Aufgabe der Erfindung

Aufgabe der vorliegenden Erfindung ist es, ein Bremssystem bereitzustellen, das für die Anforderungen der hohen Verfügbarkeit beim vollautomatisierten Fahren (FAD) und beim autonomen Fahren (AD) erfüllt und auch für Elektrofahrzeuge geeignet ist.

### Lösung der Aufgabe

Die Aufgabe der Erfindung wird durch ein Bremssystem mit den Merkmalen des Patentanspruchs 1 gelöst. Vorteilhafte Ausgestaltungen des Bremssystems nach Anspruch 1 ergeben sich durch die Merkmale der Unteransprüche.

Die Erfindung zeichnet sich vorteilhaft dadurch aus, dass Redundanzanforderungen des vollautomatisierten Fahrens (FAD) und autonomen Fahrens (AD) erfüllt werden und gleichzeitig hohe Synergieeffekte im Zusammenwirken des Bremssystems mit elektrischen Antriebsmotoren von Elektrofahrzeugen genutzt werden. So ist beispielweise die Energierückgewinnung von kinetischer Energie durch den Elektromotor nicht durch das Bremssystem, wie zum Beispiel bei Folgebremskraftverstärkern ohne Wegsimulator gemäß DE 11 2009 005 541 B3, eingeschränkt. So wird das erfindungsgemäße Bremssystem vorteilhaft für FAD mit einer Betätigungseinheit (BE) mit Pedalfühlsimulator ausgestattet. Es ist jedoch ebenso möglich, das erfindungsgemäße Bremssystem für AD ohne Betätigungseinheit (BE) auszuführen, wobei dann die Steuerung des Bremssystems über eine übergeordnete Steuerung erfolgt.

In der Ausführungsform für die Stufe 4 (FAD) muss für das autonome Fahren eine Betätigungseinheit mit entsprechenden Redundanzen vorgesehen werden. Die Betätigungseinheit weist dabei optional eine hydraulische Verbindung zu mindestens einem Bremskreis auf oder wird als reiner Pedalgefühlsimulator ohne Verbindung mit der Hydraulik des Bremssystems eingesetzt, wobei die Übertragung der Betätigungskraft dann rein elektrisch erfolgt. Ein elektrisches Bremspedal (E-Bremspedal) kann dabei hydraulisch oder auch elektromechanisch ausgeführt sein.

Bei der Ausführungsform für das autonome Fahren (AD) ist keine Betätigungseinheit vorgesehen wobei eine zentrale Regel- und Steuereinheit (M-ECU) die Kommunikation mit den Stelleinheiten übernimmt.

Für die radindividuelle redundante Bremsregelung sieht die Erfindung in einer Basisausführungsform vor, dass entweder
- mindestens eine Druckversorgungseinrichtung zwei voneinander unabhängige elektronische Steuer- und Regeleinheiten oder eine zweifach-redundante Steuer- und Regeleinheit zur Ansteuerung ihres elektromotorischen Antriebs aufweist,
   und/oder
- jede Druckversorgungseinrichtung jeweils einem Bremskreis für den Regelbetrieb des Bremssystems zugeordnet ist, und dass ein Verbindungsmodul zur wahlweisen Verbindung der Bremskreise vorgesehen ist, derart, dass bei Ausfall einer Druckversorgungseinrichtung die Druckversorgung bzw. Druckregelung für beide Bremskreise durch die andere noch funktionsfähige Druckversorgungseinrichtung erfolgt.

Durch diese Ausbildung ist eine zweifache Redundanz zumindest für die Druckversorgung und deren Ansteuerung gegeben.

In einer weiteren erfindungsgemäßen Ausbildung der Basisausführungsform zum Vorsehen einer weiteren Redundanz ist vorgesehen, dass mindestens eine, insbesondere jede, elektronische Steuer- und Regeleinheit voneinander getrennte Wicklungen des bzw. eines elektromotorischen Antriebs ansteuert. Hierdurch ist vorteilhaft gewährleistet, dass bei Ausfall eines Wicklungssystems der Antriebsmotor zumindest noch mit dem halben maximalen Drehmoment betrieben werden kann.

Die zuvor beschriebenen Ausführungsformen können zudem dadurch sicherer gestaltet werden, wenn vorteilhaft entweder jeder Druckversorgungseinrichtung jeweils eine, insbesondere redundante, Ventilanordnung oder zwei Druckversorgungseinrichtungen eine redundante Ventilanordnung zugeordnet ist. Unter einer redundanten Ventilanordnung versteht die Erfindung, dass diese derart ausgeführt ist, dass bei Ausfall einer oder beider Steuer- und Regeleinheiten der Druckversorgungseinrichtung die Magnetventile der Druckversorgung noch sicher betrieben werden können.

In einer weiteren Ausführungsform kann die Druckversorgungseinrichtung zusammen mit der Ventilanordnung und der mindestens einen, der Druckversorgungseinrichtung zugeordneten elektronische Steuer- und Regeleinheit zu einem Modul bzw. Baugruppe zusammengefasst sein. Hierdurch ergibt sich eine kompakte und kostengünstige Einheit, die platzsparend und einfach in dem Fahrzeug untergebracht und montiert werden kann.

Bei Vorsehen einer Betätigungseinrichtung, insbesondere in Form eines Bremspedals, ist es von Vorteil, wenn diese auf eine Kolben-Zylinder-Einheit wirkt und deren Kolben verstellt, so dass über eine hydraulische Verbindung im Fehlerfalle ein Bremsdruck mit der Betätigungseinrichtung in mindestens einem Bremskreis aufbaubar ist. Hierbei kann ein einfacher Hauptbremszylinder oder ein Tandem-Hauptzylinder, optional mit redundanten Dichtungen, und zwingend erforderlichem Wegsimulator vorgesehen werden.

Vorteilhaft regeln die vorbeschriebenen Bremssysteme im Regelbetrieb mit geschlossenem Bremskreis, d.h. im Regelbetrieb erfolgt kein Druckabbau über Magnetventile in den Vorratsbehälter, und/oder der Druck in den Radbremsen des jeweiligen Bremskreises wird im Multiplexverfahren und/oder gleichzeitig eingeregelt bzw. eingestellt. Zur Sicherheit sollten die Schaltventile derart an die Radbremsen angeschlossen sein, dass sie sich durch Druck in der Radbremse selbstständig öffnen. Hierdurch ist vorteilhaft gewährleistet, dass in jedem Fall der Bremsdruck in den Radbremsen abgebaut werden kann und es nicht zu unerwünschtem Abbremsen bzw. Blockieren der Räder kommt.

Ebenso ist es von Vorteil, wenn bei den vorbeschriebenen Bremssystemen ein Druckabbau im Regelbetrieb, insbesondere bei sehr hohen Druckdynamikanforderungen z.B. bei high-µ-ABS-Regelung, insbesondere bei Ausfall einer Druckversorgungseinrichtung und/oder einer Steuer- und Regeleinrichtung einer Druckversorgung in einer Radbremse über das Öffnen eines Auslassventils in den Vorratsbehälter, insbesondere im erweiterten Multiplexbetrieb (sog. MUX 2.0-Verfahren), bei dem eine Druckversorgungseinrichtung für alle Radbremsen die Druckregelung übernimmt, erfolgt.

In einer weiteren sehr vorteilhaften Ausgestaltung der vorbeschriebenen Bremssysteme ist mindestens eine Radbremse, vorzugsweise zwei Radbremsen, eine hydraulisch unterstützte elektromechanische Bremse (H-EMB), eine elektrische Parkbremse (EPB) oder eine elektromechanische Bremse (EMB). Gleichsam kann neben einer herkömmlichen hydraulischen Radbremse ein Elektromotor einer zusätzlichen elektrischen Parkbremse oder einer elektromechanischen Bremse auf das Rad abbremsend einwirken. Durch diese Maßnahme wird eine weitere Redundanz geschaffen. Bei dem Vorsehen einer hydraulisch unterstützten elektromechanischen Bremse kann vorteilhaft mit dieser sowohl hydraulisch als auch elektromechanisch eine Bremskraft aufgebaut werden.

Sofern bei einem der Bremssysteme keine Betätigungseinrichtung und/oder ein Traktionsmotor für ein Rad oder eine Achse vorgesehen ist, sollte das Bremssystem, insbesondere auch die elektronischen Steuer- und Regeleinheiten der Druckversorgungseinrichtungen, von einer übergeordneten zentralen Steuerungseinheit gesteuert werden. Die übergeordnete Steuerungseinheit kann dabei die Druckversorgungseinrichtungen, Ventile, elektrischen Antriebsmotoren und/oder EMB bzw. H-EMB während des Bremsvorganges und/oder ABS-Regelbetriebes und/oder zur Diagnose des Bremssystems ansteuern und kann neben der Bremse auch andere Fahrdynamikfunktionen (z.B. Lenkung, Dämpfung, Wankstabilisierung) sinnvollerweise steuern.

Beim Vorsehen mindestens eines elektrischen Antriebs- bzw. Traktionsmotors für mindestens eine Achse oder Rad des Fahrzeugs kann dieser vorteilhaft für das Abbremsen einer Achse oder eines Rades mit genutzt werden. Hierdurch ist eine weitere Redundanz gegeben. So kann im Regelbetrieb oder bei Ausfall einer Komponente des Bremssystems, z.B. einer Druckversorgungseinrichtung, auch noch eine (unterstützende) Bremskraft mittels des bzw. der Traktionsmotors(-en) erzeugt werden. Durch einen kombinierten Einsatz von Druckversorgungseinrichtungen, hydraulisch unterstützter elektromechanischen Bremse(n) H-EMB, elektrischer(n) Parkbremse(n) EPB und/oder elektromechanischer(n) Bremse(n) EMB und/oder einem oder mehrerer Antriebsmotor(en) kann vorteilhaft im Regelbetrieb oder bei Ausfall einer oder mehrerer Komponenten des Bremssystem ein schnellerer Bremskraftanstieg mit kürzerer Time to Lock (TTL) erfolgen bzw. ein höheres Bremsmoment erzeugt werden.

Vorteilhaft kann bei den vorbeschriebenen Bremssystemen jeder Druckversorgungseinrichtung mindestens ein Trennventil am Ausgang der Druckversorgung vorgeschaltet sein, wobei durch Verschließen des Trennventils die jeweilige Druckversorgungseinrichtung, insbesondere bei deren Ausfall, von dem jeweiligen Bremskreis abtrennbar ist.

Um das erfindungsgemäße Bremssystem noch sicherer gegen Ausfall zu machen, kann mindestens eine Steuer- und Regeleinrichtung einer Druckversorgung und Ventilanordnung eine separate Spannungsversorgung und insbesondere Signalübertragung aufweisen, insbesondere alle Module einer Druckversorgungseinrichtung, durch mindestens zwei Bordnetze versorgt werden und/oder redundante Signalübertragungen aufweisen. Unter zwei Bordnetzen wird im Sinne der Erfindung verstanden, dass entweder unterschiedliche Spannungsebenen und/oder Spannungsquellen zur Versorgung des Bremssystems dienen.

Es ist ferner von Vorteil, wenn bei den vorgenannten möglichen Ausführungsformen des erfindungsgemäßen Bremssystems entweder die Druckregelung in einem Bremskreis unter Verwendung mindestens eines Drucksensors und/oder über die Strommessung des Motorstroms des Antriebes und Wegsteuerung des Kolbens der Druckversorgungseinrichtung erfolgt, welche durch Berücksichtigung der Temperatur des Antriebes weiter in der Druckregelgüte verfeinert werden kann. Hierdurch ist eine präzise Druckregelung auch ohne Drucksensor möglich, wie sie bereits in DE102005055751B4 des Anmelders in Funktion ohne Temperatursensor ausführlich erläutert ist.

Um im Fehlerfall, z.B. bei einer Ventilleckage, eine sichere Trennung der Bremskreise zu ermöglichen, und um Druck in den Radbremsen abzubauen, ist es von Vorteil, wenn ein Verbindungsmodul mit Schaltventilen zwischen den Bremskreisen angeordnet ist, so dass entweder die Bremskreise miteinander verbindbar, voneinander trennbar und/oder einer oder beide Bremskreise mit dem Vorratsbehälter verbindbar sind, insbesondere wenn keine Betätigungseinrichtung vorgesehen ist, über die ein Druckabbau in den Vorratsbehälter erfolgen kann. Für die Verbindung der Bremskreise mit dem Vorratsbehälter werden dabei vorteilhaft stromlos offene Magnetventile eingesetzt. Für die Verbindung zwischen den Druckeinheiten sind im Verbindungsmodul vorzugsweise stromlos geschlossene Magnetventile oder in der Position arretierbare Hydraulikfluidübertragungskolben einzusetzen.

Das Verbindungsmodul kann dabei entweder z. B. mehrere Magnetventile aufweisen, über die eine hydraulische Verbindung zwischen einem Bremskreis und dem Vorratsbehälter oder zwischen den beiden Bremskreisen herstellbar ist. Es ist jedoch auch möglich, dass das Verbindungsmodul durch eine Kolben-Zylinder-Einheit gebildet ist, deren Kolben einen ersten und einen zweiten Druckraum voneinander trennt, wobei der erste Druckraum mit dem einen ersten Bremskreis und der zweite Druckraum mit dem anderen zweiten Bremskreis in Verbindung ist und der Kolben mittels eines Blockiereinrichtung arretierbar ist. Im arretierten Zustand würde dann quasi keine hydraulische Verbindung zwischen den Bremskreisen bestehen, da eine Volumenverschiebung verhindert wird.

Ebenso von Vorteil ist, wenn die Kolben-Zylinder-Einheiten des Bremssystems redundante Dichtungen und hydraulische Diagnoseleitungen aufweisen und zudem redundante Regel- und Steuereinheiten vorgesehen sind, und dass die Antriebe der Druckversorgungseinrichtungen 2x3 Phasen aufweisen, und dass mittels Sensoren der Motorphasenstrom iₚₕₐₛₑ, der Motorwinkel α, insbesondere die Temperatur T, gemessen und bei der Druckregelung berücksichtigt wird, und dass eine redundante Versorgung über zwei Bordnetze bzw. Spannungsniveaus gegeben ist, und dass eine redundante Signalübertragung vorgesehen ist. Durch das Vorsehen all dieser Maßnahmen ergibt sich vorteilhaft ein sehr sicheres System, welches für die AD Stufen 3-5 geeignet ist.

Vorteilhaft kann ein Vorratsbehälter bei den vorbeschriebenen Bremssystemen eingesetzt werden, der mehrere voneinander getrennte Kammern aufweist, wobei eine Kammer des Vorratsbehälters mit mindestens einer Druckversorgungseinrichtung hydraulisch verbunden bzw. verbindbar ist und/oder eine weitere Kammer mit dem Verbindungsmodul hydraulisch verbunden bzw. verbindbar ist. Hierdurch ergeben sich vorteilhaft weitere Schaltungsmöglichkeiten mittels der verwendeten Ventile, die zur weiteren Sicherheit des Bremssystems beitragen.

Vorteilhaft können die vorbeschriebenen Bremssysteme derart betrieben werden, dass mindestens achsweise, vorzugsweise radindividuell, die Verzögerung der Räder mittels der Druckversorgungseinrichtung(-en), dem bzw. den elektrischen Antriebsmotor(en) und der hydraulisch unterstützten elektromechanischen Bremse (H-EMB) bzw. der elektromechanischen Bremse (EMB), erfolgt. Auch kann Torque-Vectoring mittels der Druckversorgungseinrichtung(-en), dem bzw. den elektrischen Antriebsmotor(en) (TM) und der hydraulisch unterstützten elektromechanischen Bremse (H-EMB) bzw. der elektromechanischen Bremse (EMB), vorgenommen werden.

Bei Verwendung eines Temperatursensors kann zudem die Temperatur des Antriebes der Druckversorgungseinrichtung(en) ermittelt werden und die Temperatur zur genaueren Ermittlung der Drehmomentmomentkonstante verwendet werden, welche sich durch Temperaturanstieg linear um den Faktor (1-Br%*ΔT) linear verringert. Damit kann eine noch genauere Regelung des Drehmoments und damit des Drucks vorgenommen werden sofern diese auf Basis des Phasenstromes i erfolgt, da der Zusammenhang Drehmoment = kt(T) * Phasenstrom i gilt.

Zur Druckregelung kann neben der Stromregelung auch die Kolbenposition und die Druckvolumenkennlinie herangezogen werden und die Veränderung der Druckvolumenkennlinie bei z.B. Lufteinschluss, durch den Drucksensor oder die H-EMB angepasst werden. Durch den kombinierten Einsatz beider zuvor beschriebenen Verfahren ergibt sich eine hochpräzise Druckregelung, die auch ohne Drucksensor möglich ist. Dieses Verfahren liefert weitere Redundanz bei Ausfall von Druckgebern oder kann auch zur Vereinfachung des Systems mit geringen Redundanzanforderungen (z.B. System mit nur einem oder ohne Druckgeber), eingesetzt werden.

Das erfindungsgemäße Bremssystems kann zudem zur Lenkung/Torque Vektoren verwendet werden, wobei die radindividuellen Regelmöglichkeiten mit der mindestens eine Druckversorgung sowie die hydraulisch unterstützte elektromechanische(n) Bremse(n) H-EMB, elektrische(n) Parkbremse(n) EPB und/oder elektromechanische(n) Bremse(n) EMB und/oder Antriebsmotoren oder der Lenkung EPS verwendet werden können.

Die Erfindung zeichnet sich somit durch einen sehr einfachen Aufbau mit sehr hoher Verfügbarkeit, d.h. bei Komplett- bzw. Teilausfall von Modulen wird die Funktion nicht bzw. in sehr geringem Umfang eingeschränkt. Auch bei Ausfall diverser Komponenten kann immer annähernd max. Verzögerung sowie Fahrstabilität sichergestellt werden. Dazu ist auch bei Ausfall einer Druckversorgungseinrichtung eine Verzögerung von 0,6 bis 0,9 g, und eine achsweise Regelung, vorzugsweise radindividuelle Regelung mit Lenkeingriff/Stabilitätseingriff gewährleistet. Eine hohe Verfügbarkeit und Performance wird somit - noch einmal zusammenfassend - durch folgende Maßnahmen erreicht, die einzeln oder in Kombination vorgesehen werden können:
- vornehmlicher Betrieb im geschlossen Bremskreis (>90% der Betriebszeit) sowohl im Bremskraftverstärker (e-BKV), Rekuperationsbetrieb als auch vorwiegend im ABS-Regelbetrieb, damit werden schlafende Fehler vermieden. Wird das System offen betrieben, z.B. ist im ABS durch Öffnung eines Auslassventils der Radkreise mit dem Vorratsbehälter hydraulisch verbunden, sind unerkannte Undichtigkeiten bei Ventilen und Dichtungen (schlafende Fehler) besonders schwer zu erkennen. Daher ist der Betriebszustand zu vermeiden bzw. eine Diagnose der Dichtigkeit nach jedem ABS-Betrieb sinnvoll; eine Diagnose kann derart erfolgen, dass z.B. im Stillstand der Kolben der Druckversorgung bei geschlossenen Ventilen bewegt wird und ein Volumenverlust oder Druckanstieg ermittelt und ausgewertet wird.
- Redundanzen und Teilredundanzen der DV-Motorelektronik: z.B. Ausführung des Motors der DV als 2 x 3 Phasenmotor sowie Teilredundanz der Motoransteuerung. Damit kann bei Ausfall einer Teilelektronik (Wicklungskurzschluss, Ausfall eines 3-Phasenstranges) der Motor noch mit halbem Drehmoment betrieben werden. Bei einer Auslegung auf 200 bar kann dann auch bei Ausfall noch 100 bar, d.h. näherungsweise der Blockierdruck erreicht werden. Damit ist auch bei Ausfall einer Elektronik noch ein ABS-Betrieb mit maximaler Leistung bei Niedrigreibwerten und zufriedenstellender Leistung bei Straßenzuständen mit hohen Reibwert möglich;
- Teilredundanzen der Elektronik für die Ventilansteuerung. Fällt die Elektronik aus, ist es für die Verfügbarkeit sehr vorteilhaft, wenn die Schaltventile noch betätigt werden können. Somit ist in der Elektronik eine Redundanz für die Ventilansteuerung vorzusehen, damit die Ventilbetätigung bei Ausfall der Motorsteuerung noch funktioniert;
- Betrieb im geschlossenen MUX-Betrieb mit Schaltventilen und Einsatz von Auslassventilen (mindestens 1 AV je Achse) im Fehlerfall, d.h. Ausfall oder Teilausfall einer Druckversorgung. Damit kann mit geringer Motorleistung die Druckregeldynamik noch aufrechterhalten werden, da der Druck nicht nur durch die Druckversorgung sequentiell oder simultan auf- und abgebaut werden kann, sondern auch ein Druckabbau über Auslassventile erfolgen kann;
- Einsatz einer H-EMB, EMB oder EPB im Bremsbetrieb, insbesondere Einsatz EPB oder H-EMB beim Ausfall von Modulen. Damit kann zum einen eine Radbremsung über den hydraulischen Zugang sowie über den in der H-EMB verbauten Elektromotor erfolgen. Der Elektromotor kann als EC-Motor oder Bürstenmotor ausgeführt werden. Somit kann eine Bremskraftunterstützung durch den Elektromotor am jeweiligen Rad erfolgen;
- Nutzung der eingesetzten Traktionsmotoren zur Steigerung des Bremsmomentes bei gleichzeitiger Rekuperation von kinetischer Fahrzeugenergie. Aufgrund der hohen Trägheitsmassen des Antriebsmotor ist jedoch zu berücksichtigen, dass ein Bremsmoment über den Traktionsmotor weniger dynamisch aufgebaut werden kann, als über die Druckversorgung und die H-EMB, EPB oder EMB;
- Einsatz einer fehlersicheren und diagnosefähigen Betätigungseinheit mit Pedalgefühlsimulator, redundanten Wegsensoren und einem Kraft-WegSensor (KWS) sowie einer speziellen Schaltung zur Diagnose des Pedalgefühlsimulators;
- Einsatz von Ventilen mit Selbstöffnungsmechanismus durch Druckbeaufschlagung durch die in Radbremse insbesondere im stromlosen Zustand;
- Einsatz eines diagnosefähigen Verbindungsmoduls (VM) mit dem die Bremskreise sicher verbunden oder getrennt werden können und eine Verbindung der Radbremsen zum Vorratsbehälter hergestellt werden kann, insbesondere wenn das System keine Betätigungseinrichtung (BE) mit Verbindung zum Vorratsbehälter aufweist;
- Nutzung einer hydraulischen Rückfallebene in einem Bremskreis bzw. einer Achse über Verbindung der Betätigungseinheit über ein Schaltventil FV;
- Nachfördern von Volumen der DV bei Erreichen der Volumengrenze;
- Betrieb der Druckstellung ohne Druckgeber durch intelligente genaue Drehmomentschätzung aus dem Motorphasenstrom unter Einbeziehung der Motortemperatur und der Druckvolumenkennlinie, die über einen Druckgeber oder die H-EMB-Funktion abgeglichen wird;
- Umschalten von Normalbetrieb 2 Radbetrieb im MUX-Verfahren auf 4-Radbetrieb im MUX 2.0 Verfahren mit AV bei Ausfall einer DV
- Einsatz von Trapezspindel (kein Blockieren der Spindel durch Schmutzpartikel in der Laufbahn des Kugel-Gewinde-Triebes);
- Selbsthemmende Trapezspindel -> Verzicht auf FV und TV.

In den nachfolgenden Tabellen sind die Betriebsstrategien der Ausführungsform 1 (2 Druckversorgungen ohne Verbindungsmodul, Figur 1) und Ausführungsformen 2 und 3 (2 Druckversorgungen mit Verbindungsmodul, Figuren 2 und 3) beschrieben.

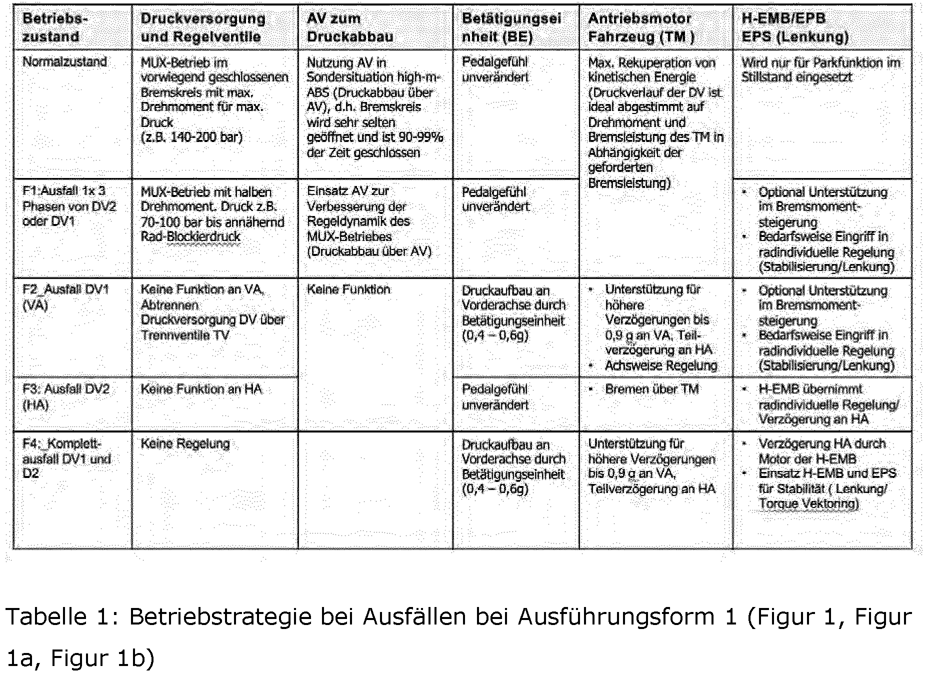

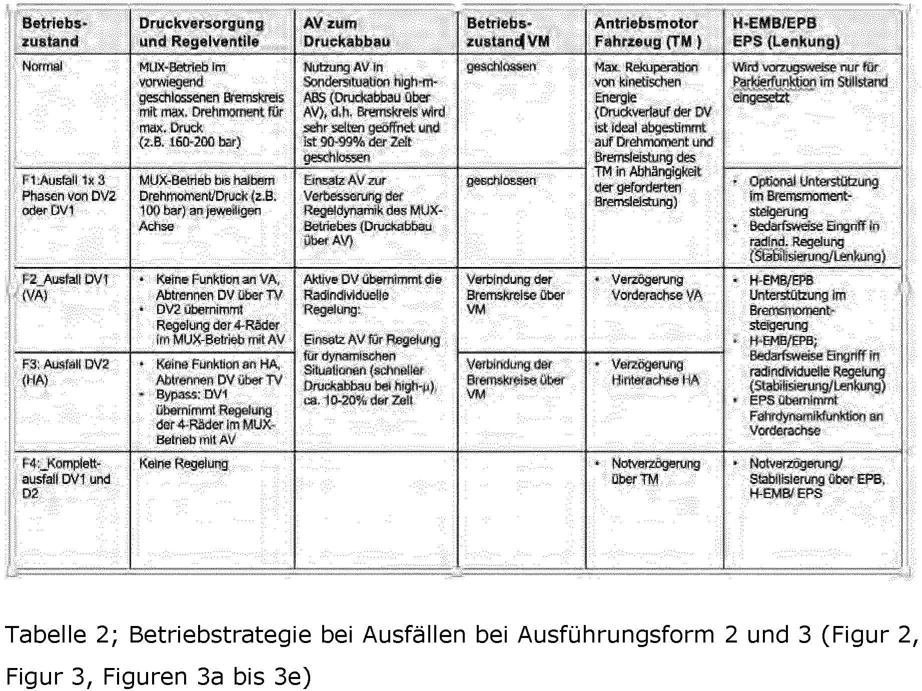

In Tabelle 3 sind für die Bremse bzw. verschiedenen fahrdynamischen Regelfunktionen (elektrische Bremskraftverstärkung e-BKV, ABS-Betrieb, Lenkung/Torque Vektoring, Stabilitätsregelung/ESP, Rekuperation und Parkbremse) die durch die Komponenten Druckversorgung DV1 und DV2, Antriebsmotor TM1, TM2, Lenkung EPS und hydraulische unterstützte EMB bzw. Parkbremse EPB abgebildet werden können. Dabei ist die primäre Funktion sowie die Sekundärfunktion/Redundanz gekennzeichnet. Hiermit wird verdeutlicht, dass die wichtigsten Fahrdynamikfunktionen mindestens 2-fach redundant vorhanden sind. Die Druckregelung kann ist bei Ausführung als 2x3 Phasenmotor und Verbindungsmodul sogar als 3-fach redundant betrachtet werden.

Das erfindungsgemäße Bremssystem eignet sich somit für alle Stufen des autonomen Fahrens bis zu Stufe 5 (AD).

**Tabelle 3: Primärfunktion und Sekundärfunktion/ Redundanz.**

| | **e-BKV** | **ABS** | **Lenkung/ Torque Vektoring** | **Stabilität (ESP)** | **Energie Rück-gewinnung** | **Park-bremse** |
|---|---|---|---|---|---|---|
| DV1 | 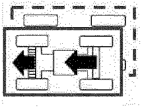 | 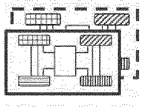 | 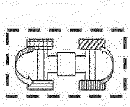 | 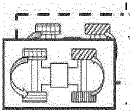 | | 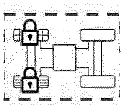 |
| DV2 | | | | | | |
| TM1 | 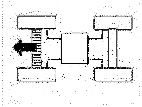 | | | | 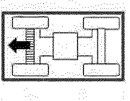 | 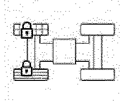 |
| TM1 | 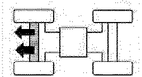 | | 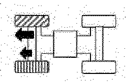 | | 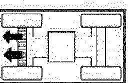 | 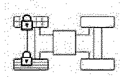 |
| TM2 | | | | | | |
| EPS | | | 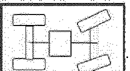 | 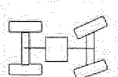 | | |
| H-EMB | 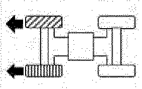 | 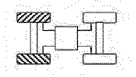 | 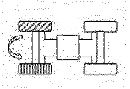 | 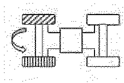 | | 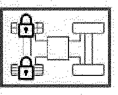 |
| EPB | | | | | | |

| | | | | | | |
|---|---|---|---|---|---|---|
| 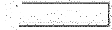 **Primärfunktion** 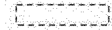 **Sekundärfunktion/ Redundanz** | | | | | | |

Das Bremssystem kann auch derart vereinfacht werden, dass ein sehr kostengünstiges System mit geringeren Redundanzanforderungen und sinnvoller Kombination der primären Versorungseinrichtung mit den Bremsaggregaten, z.B. für BRIC-Staaten wie Indien, Brasilien, China aus dem System abgeleitet wird. Hier wird auf die Redundanz der Druckversorgereinrichtung mit redundanten ECU, beispielsweise 2x3 Phasen, verzichtet und es wird die hydraulische Rückfallebene über Druckerzeugung des Fahrers über die Betätigungseinheit sowie eine Verzögerung durch den Elektromotor TM genutzt. Damit sind auch mit einer einfachen Betätigungseinheit mit einem Kolben (HZ) die aktuell gesetzlichen Vorschriften der Bremsverzögerung bis 0,3-0,5g für autonomes Fahren der Stufen 1 bis 2 erreichbar. Zudem kann beispielsweise auf den Druckgeber verzichtet werden und ausschließlich nach dem PPC-Verfahren geregelt werden. Damit können die Fehlerfälle F1 und F3 nicht mehr auftreten. Eine elektrische Parkierbremse kann ebenfalls entfallen, wenn eine hydraulisch unterstützte Bremse H-EMB eingesetzt wird, beziehungsweise eine hydraulisch unterstützte Parkbremse gemäß DE 10 2007 015809 eingesetzt wird und der Druck in der Parkbremse mit einem Magnetventil eingesperrt wird. Bei Ausfall der Hydraulikleitung bzw. Leckage kann dann nachgefördert werden oder über den Traktionsmotor noch ein Haltemoment erzeugt werden.

Die erfindungsgemäße Druckversorgungseinrichtung kann auch von einer Rotationspumpe angetrieben sein, welche insbesondere eine Zahnradpumpe sein kann. Sie kann dann ein Motorgehäuse mit darin angeordnetem elektromotorischem Antrieb aufweisen, welcher die Zahnradpumpe antreibt. Der Antrieb hat dafür einen Stator und einen Rotor. Über den Rotor des Antriebs wird ein inneres Zahnrad der Zahnradpumpe bewegt. Der Antrieb ist dabei erfindungsgemäß mittels mindestens einer Dichtung, welche zwischen Rotor und innerem Zahnrad angeordnet ist, als Trockenläufer ausgebildet bzw. weist einen trockenlaufenden Rotor auf, d.h. der Rotor des Antriebs wird nicht von dem von der Zahnradpumpe gefördertem Medium umströmt und/oder ist nicht von dem Medium umgeben. Durch die Ausbildung als Trockenläufer dreht der Rotor ohne größere Reibungs- und Strömungswiderstände, wodurch höhere Drehzahlen und ein besserer Wirkungsgrad erzielbar ist.

Eine besonders kompakte und einfache Druckversorgungseinrichtung ergibt sich, wenn das Motorgehäuse eine Seitenwandung aufweist, an der die Zahnradpumpe angeordnet ist, insbesondere diese eine Ausnehmung aufweist, in der die Zahnradpumpe zumindest teilweise oder ganz einliegt. Die Seitenwandung des Motorgehäuses kann dabei von einer mit dem Rotor drehfest verbundenen Welle durchgriffen sein, wobei das Zahnrad entweder drehfest mit der Welle verbunden ist oder über ein zwischengeschaltetes Getriebe und/oder einer Kupplung mit der Welle gekoppelt ist.

Eine vorteilhafte kompakte und integrierte Ausbildung der zuvor beschriebenen Druckversorgungseinrichtung erhält man, wenn der Anrieb mit seinem Gehäuse an einem Hydraulikgehäuse mit mindestens einem darin angeordneten Ventil und/oder Hydraulikleitungen bzw. -kanälen anliegt oder mit diesem eine Einheit bildet. Die Seitenwandung des Antriebsgehäuses kann dabei an der Seitenwandung des Hydraulikgehäuses anliegen bzw. anstoßen, insbesondere an dieser befestigt sein, wobei die, insbesondere topfförmige, Ausnehmung die Zahnradpumpe zumindest teilweise oder ganz aufnimmt und hin zum Hydraulikgehäuse geöffnet ist. Bei aneinander angeordneten Gehäusen kann die Zahnradpumpe entweder ganz in der Ausnehmung der Wandung des Antriebsgehäuses, ganz in einer Ausnehmung des Hydraulikgehäuses oder aber sowohl in einer Ausnehmung der Seitenwandung des Antriebsgehäuses als auch in einer Ausnehmung der Seitenwandung des Hydraulikgehäuses einliegen. Im letzteren Fall sind die Öffnungen der beiden Ausnehmungen dann zueinander zugewandt. Zusätzliche Dichtungen können dabei vorgesehen sein, um die beiden Gehäuse zueinander und nach außen hin abzudichten.

Die vorbeschriebene Ausnehmung in der Seitenwandung des Antriebsgehäuses ist dabei vorteilhaft nach außen hin, und sofern ein Hydraulikgehäuse vorhanden, zu diesem hin geöffnet. Die Ausnehmung kann selbst vorteilhaft topfförmig ausgebildet sein. Auch kann sie einen zylindrischen im Querschnitt kreisförmigen Abschnitt aufweisen, in dem die Zahnradpumpe mit ihren Zahnrädern einliegt.

Die Seitenwandung des Antriebsgehäuses kann zudem vorteilhaft als Flansch ausgebildet sein, mit dem der Antrieb an einem anderen Teil oder Aggregat befestigbar ist.

Die bei der erfindungsgemäßen Druckversorgungseinrichtung eingesetzte Zahnradpumpe kann eine Innenzahnradpumpe mit Sichel, eine Außenzahnradpumpe oder Zahnringpumpe sein.

Die Zahnradpumpe kann zudem vorteilhaft axial neben dem Stator und/oder dem Rotor des Antriebs angeordnet sein, ist deren Aufbau und Größe nicht durch die Zahnradpumpe nachteilig beschränkt. Auch ist die Zahnradpumpe dann in ihrer Größe und ihrem Aufbau nicht abhängig von den Abmessungen des Stators und des Rotors.

Das Antriebsgehäuse kann mindestens zweiteilig ausgebildet sein, wobei die Seitenwandung Teil eines ersten Gehäuseteils ist oder dieses bildet. Das zweite Gehäuseteil kann z.B. topfförmig ausgebildet sein und den Stator und den Rotor des Antriebs aufnehmen.

Der Rotor ist, wie bereits ausgeführt, mit dem Zahnrad mittels einer Antriebswelle direkt oder über ein Getriebe und/oder eine Kupplung verbunden. Dabei kann das Zahnrad entweder mittels einer kraftschlüssigen Verbindung oder mittels eines Formschlusses, welcher insbesondere mittels eines Stifts oder Kerbverzahnung gebildet ist, mit der Antriebswelle drehfest verbunden sein. Bei der Zahnringpumpe ist das innere Zahnrad exzentrisch auf einem mit der Antriebswelle verbundenem Teil, insbesondere in Form einer Scheibe oder einer Nockenscheibe, angeordnet.

Sowohl bei der Ausbildung der Zahnradpumpe der erfindungsgemäßen Druckversorgungseinrichtung als Innenzahnradpumpe oder als Zahnringpumpe, ist zu dem inneren Zahnrad auch noch ein äußerer Innenzahnkranz notwendig. Der Innenzahnkranz wird bei der Innenzahnradpumpe mittels des von der Antriebswelle angetriebenen inneren Zahnrades um seine Drehachse verdreht, wobei das innere Zahnrad exzentrisch zu dem Innenzahnkranz angeordnet ist. Der Innenzahnkranz dreht sich dabei in einem äußeren, ihn umgebenden Ring oder Zylinder. Zusätzlich ist noch eine Sichel vorzusehen, welche in dem sich durch die Exzentrizität ergebenden Raum zwischen Innenzahnkranz und innerem Zahnrad angeordnet sein muss.

Im Gegensatz zur Innenzahnradpumpe ist bei der Zahnringpumpe der Innenzahnkranz fest angeordnet, wobei das innere Zahnrad aufgrund seiner exzentrischen Lagerung auf der von der Antriebswelle gedrehten Scheibe in dem Innenzahnkranz abrollt. Eine Sichel wie bei der Innenzahnradpumpe ist nicht erforderlich.

Die Antriebswelle kann erfindungsgemäß entweder
a) im Motorgehäuse einerseits, sowie in der Zahnradpumpe und/oder im Hydraulikgehäuse andererseits oder
b) nur in der Zahnradpumpe oder
c) im Hydraulikgehäuse und im Motorgehäuse oder
d) in der Zahnradpumpe und im Hydraulikgehäuse
abgestützt bzw. mittels geeigneter Lager, insbesondere Radiallager, in Form von Kugel- oder Rollenlagern, und/oder Axiallagern, gelagert sein.

Sofern ein Hydraulikgehäuse vorgesehen ist, so kann sich die Antriebswelle bis in das Hydraulikgehäuse hinein erstrecken, insbesondere bis zu dessen dem Antrieb gegenüberliegender Seite. So kann an der Antriebswelle ein Target für einen Sensor angeordnet sein, wobei der Sensor in der Steuer- und Regeleinheit (ECU) angeordnet ist. Dabei können zusätzliche Dichtungen verhindern, dass das geförderte Medium in die Steuer- und Regeleinheit gelangt. Es ist auch möglich, dass sich die Antriebswelle durch das Hydraulikgehäuse ganz hindurch erstreckt und in dem sich daran anschließenden Gehäuse, z.B. einer Steuer- und Regeleinheit, endet.

Die Zahnradpumpe als Innenzahnradpumpe kann unterschiedlich ausgebildet sein. So können in einer ersten Ausführung das innere Zahnrad, der Innenzahnkranz, die Sichel und der Außenring zwischen zwei Scheiben angeordnet sein, wobei nach entsprechender Zentrierung und Justierung der Teile zueinander die Scheiben mit dem Außenring stoffschlüssig verbunden werden. Dabei kann sich die stoffschlüssige Verbindung ganz um den Umfang herum erstrecken, so dass sich eine stabile und kompakte Ausführungsform ergibt, bei der die einzelnen sich bewegenden Teile nur kleine Spiele und Spalte zueinander aufweisen, wodurch ein guter Wirkungsgrad erreicht wird und ein hoher Druck erzielbar ist.

Nachfolgend werden mögliche Ausführungsformen des erfindungsgemäßen Bremssystems anhand von Zeichnungen näher erläutert.

Es zeigen:

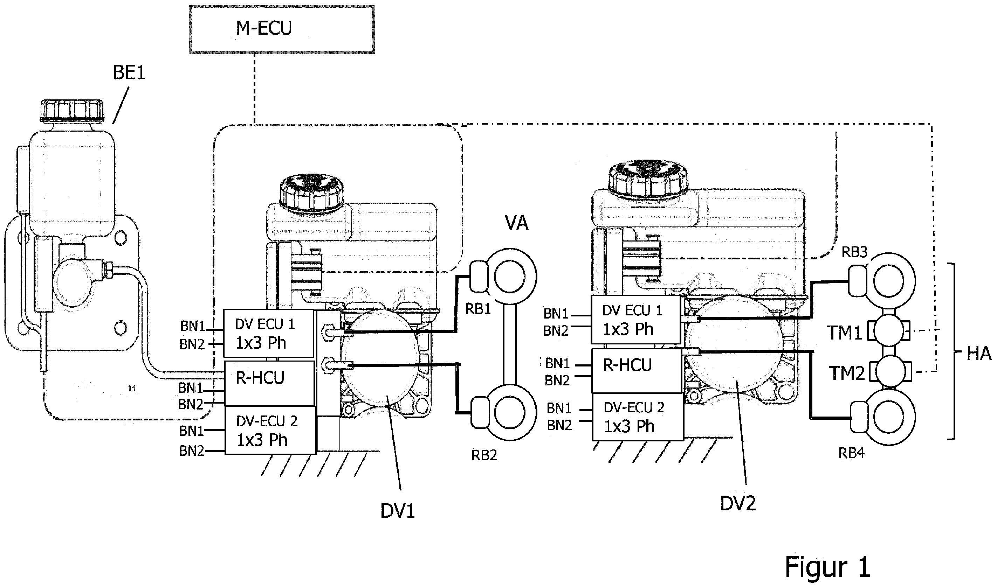

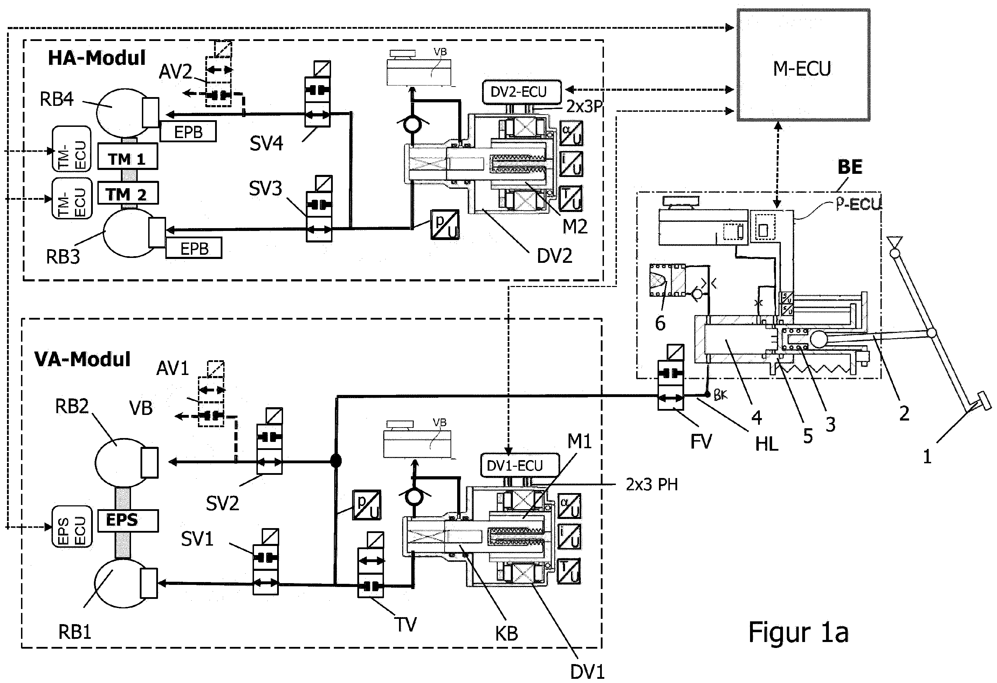

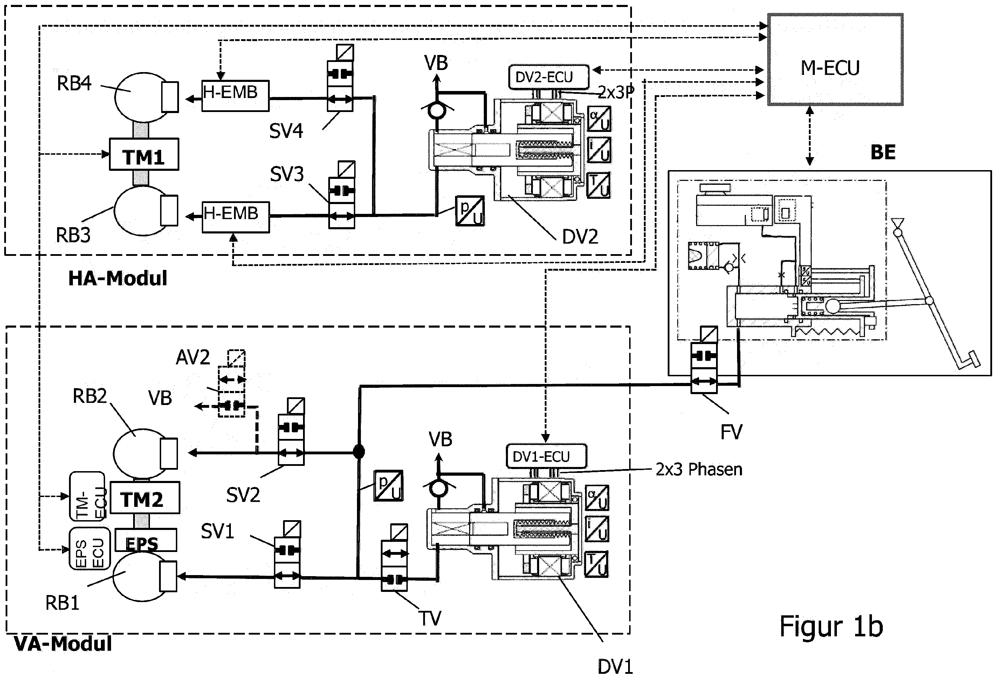

- Fig. 1:: Eine schematische Darstellung einer ersten Ausführungsform des erfinderischen Bremssystems mit zwei Druckversorgungseinrichtungen, Magnetventilen, Regel- und Steuereinrichtungen in zwei Druckregelmodul-Baueinheiten, wobei jede Baueinheit mit 2 Radbremsen verbunden ist und einer Betätigungseinheit (BE), die eine hydraulische Verbindung zu einer Druckregelmodul-Baueinheit aufweist;
- Fig. 1a:: Prinzipschaltbild einer ersten möglichen Ausgestaltung des Bremssystems gemäß Figur 1 mit elektrischer Parkbremse EPB;
- Fig. 1b:: Prinzipschaltbild einer zweiten möglichen Ausgestaltung des Bremssystems gemäß Figur 1 mit hydraulisch unterstützter elektromechanischer Bremse H-EMB;

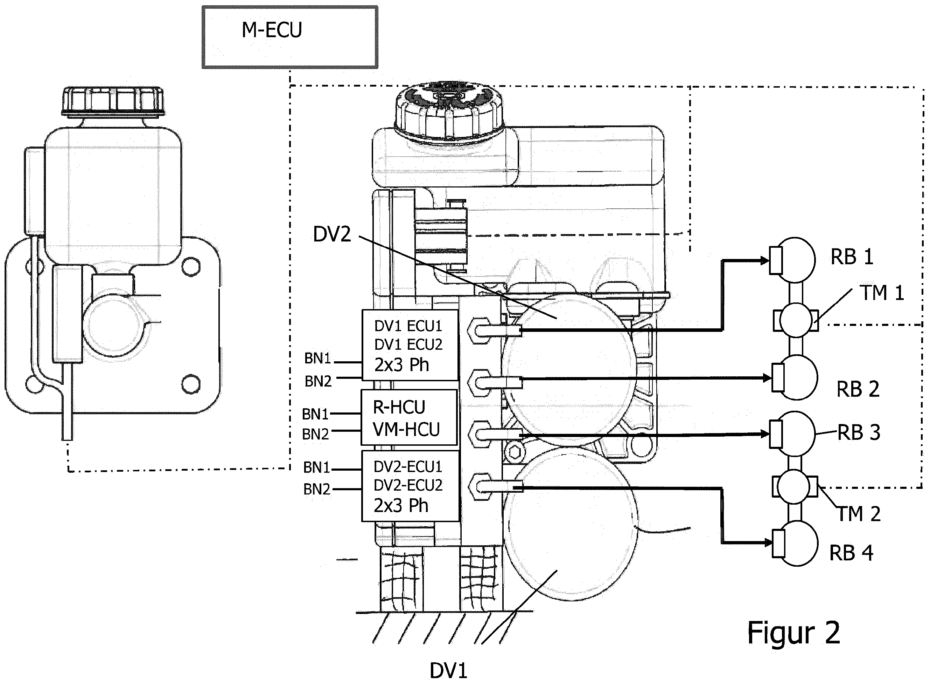

- Fig. 2:: eine schematische Darstellung einer zweiten möglichen Ausführungsform des erfinderischen Bremssystems mit zwei Druckversorgungseinrichtungen, Magnetventilen, Regel- und Steuereinrichtungen in einer Druckregelmodul-Baueinheit, wobei jede Druckversorgung mit 2 Radbremsen verbunden ist und einer Betätigungseinheit (BE), die eine elektrische Verbindung mit dem Druckregelungsmodul aufweist, wobei die Bremskreise über ein Verbindungsmodul miteinander verbindbar oder trennbar oder mit dem Vorratsbehälter verbindbar sind ;

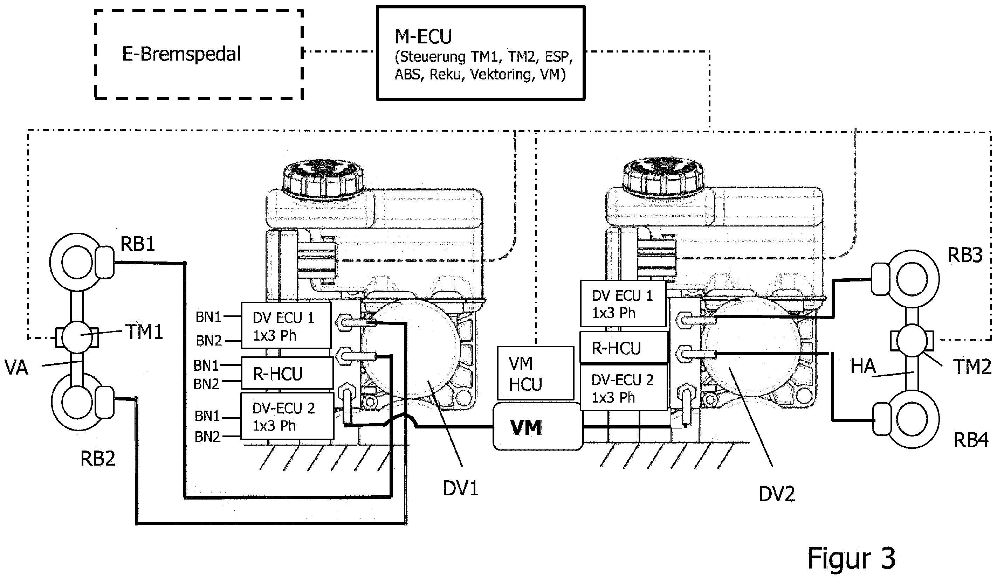

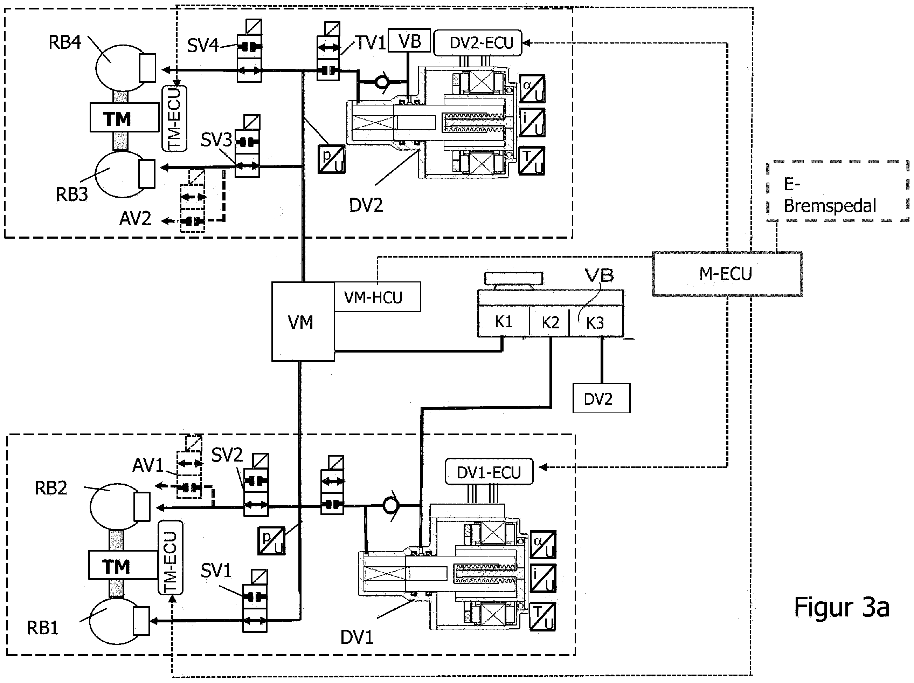

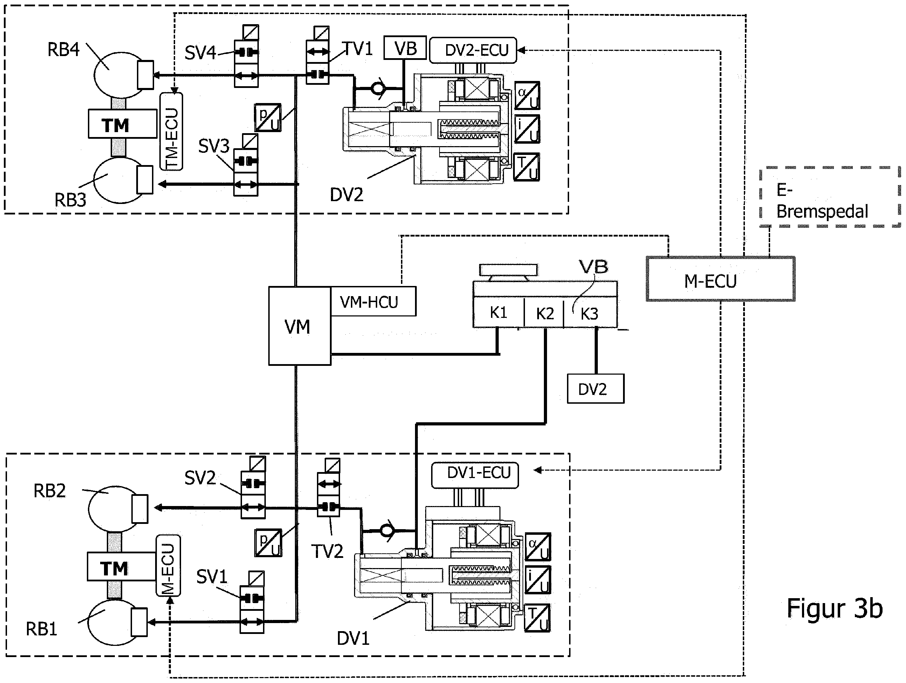

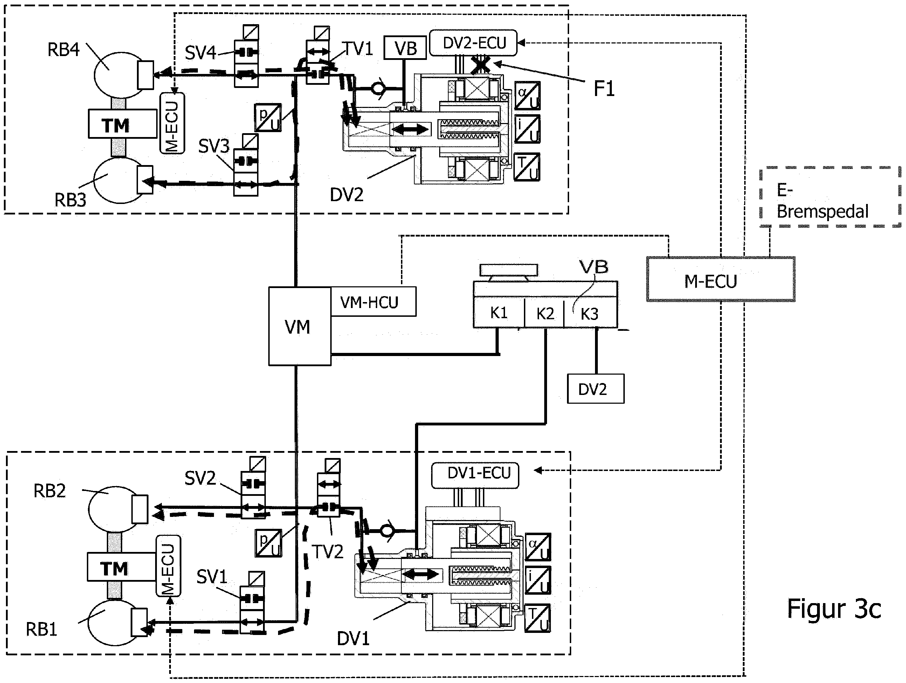

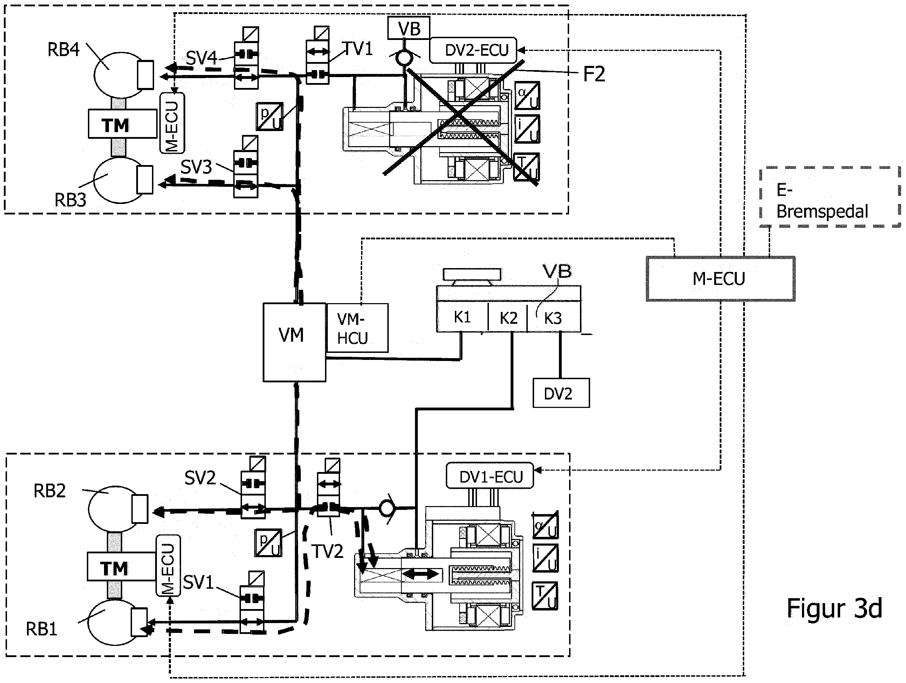

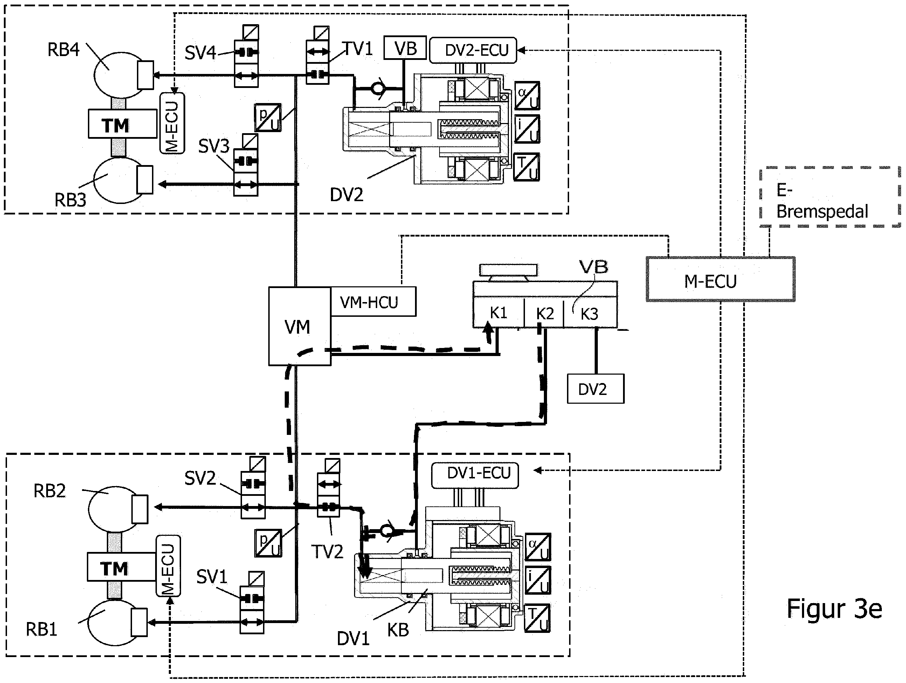

- Fig. 3:: Eine schematische Darstellung einer dritten Ausführungsform des erfinderischen Bremssystems mit zwei Druckversorgungseinrichtungen, Magnetventilen, Regel- und Steuereinrichtungen in zwei Druckregelmodul-Baueinheiten, wobei jede Baueinheit mit 2 Radbremsen verbunden ist und beide Bremskreise über ein Verbindungsmodul miteinander verbindbar oder trennbar oder mit dem Vorratsbehälter verbindbar sind;
- Fig. 3a:: Prinzipschaltbild einer ersten möglichen Ausgestaltung des Bremssystems gemäß Figur 2 oder 3;
- Fig. 3b:: Prinzipschaltbild einer zweiten möglichen Ausgestaltung des Bremssystems gemäß Figur 2 oder 3;
- Fig. 3c:: Druckregelung bei einem Bremssystem gemäß Figur 3a bei Ausfall einer Dreiphasenwicklung eines Antriebsmotors einer Druckversorgungseinrichtung;
- Fig. 3d:: Druckregelung bei einem Bremssystem gemäß Figur 3a bei Ausfall einer Druckversorgungseinrichtung;
- Fig. 3e:: Nachfördern aus dem Vorratsbehälter in eine Druckversorgungseinrichtung;

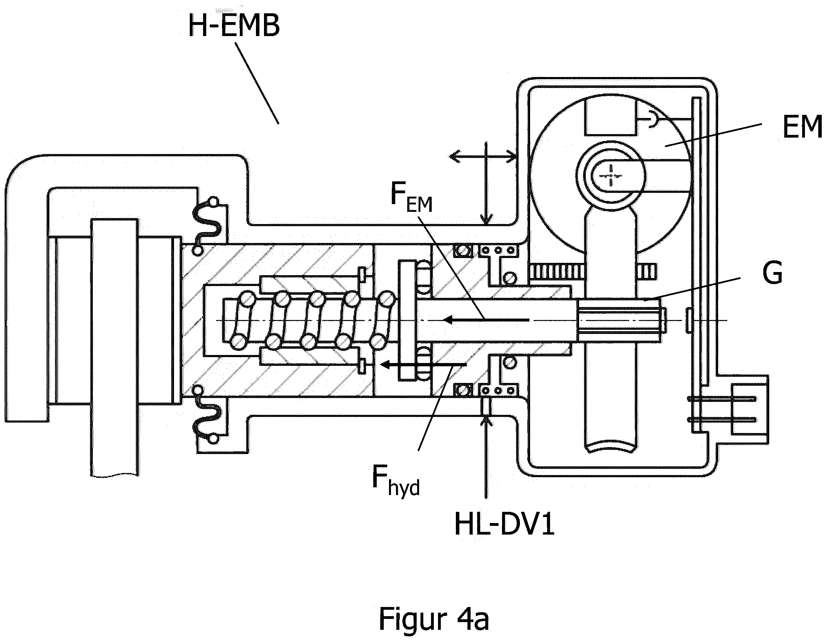

- Fig. 4a:: Querschnittsdarstellung durch eine hydraulisch unterstützte elektromechanische Bremse;

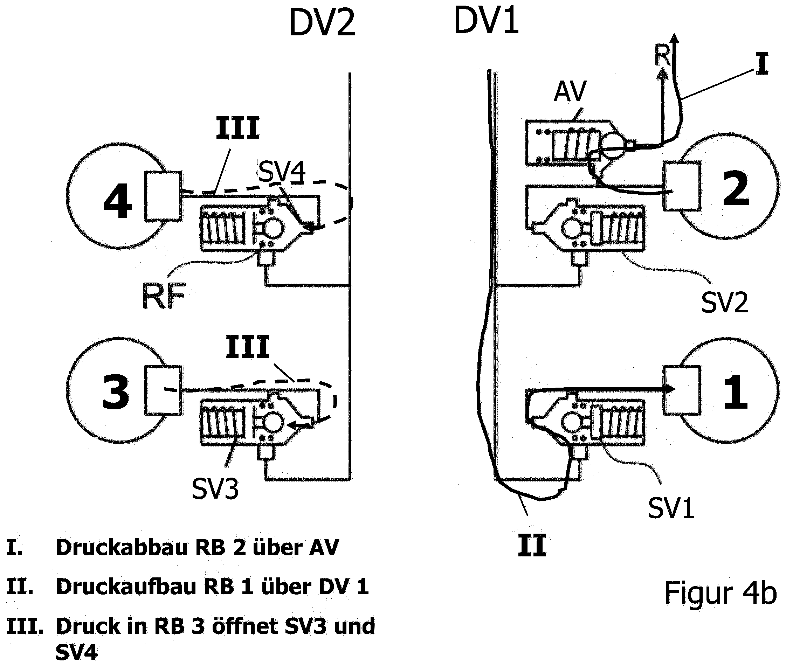

- Fig. 4b:: Prinzipschaltbild möglicher Ventilschaltungen und deren Funktion zum Druckabbau in einer Radbremse;

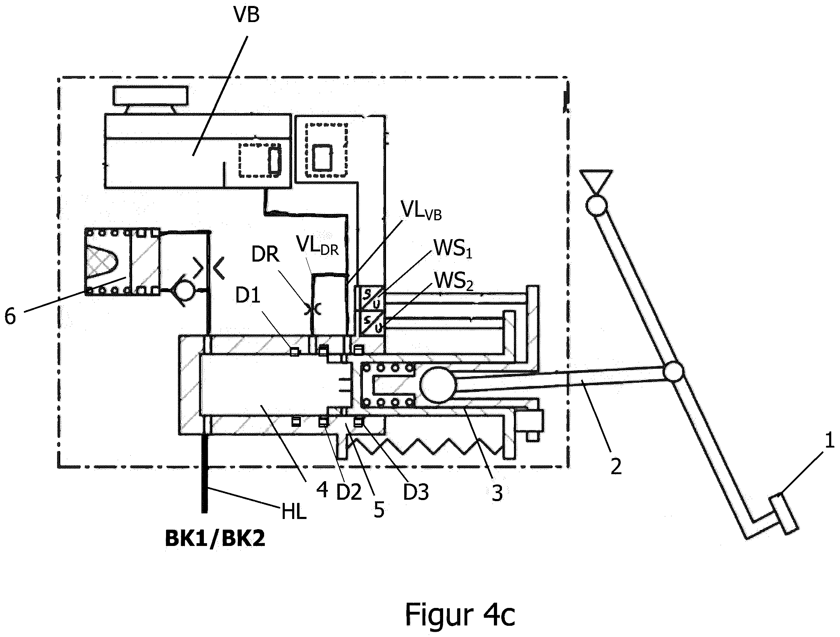

- Fig. 4c:: Betätigungseinrichtung (BE) mit zugehöriger Kolben-Zylinder-Einheit mit hydraulischer Verbindungsleitung zu einem Bremskreis;

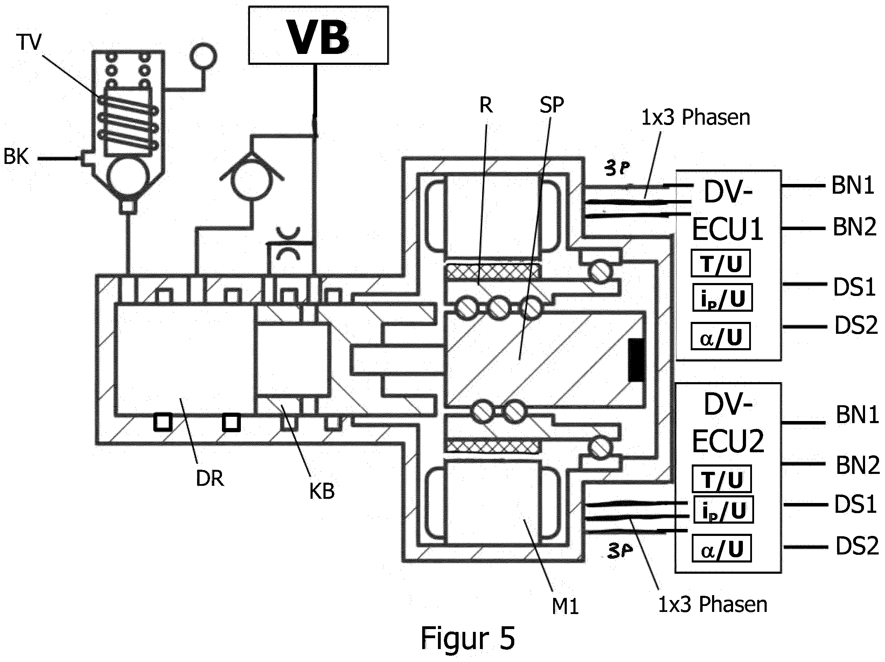

- Fig. 5:: Druckversorgungseinrichtung mit zwei Steuer- und Regeleinrichtungen;

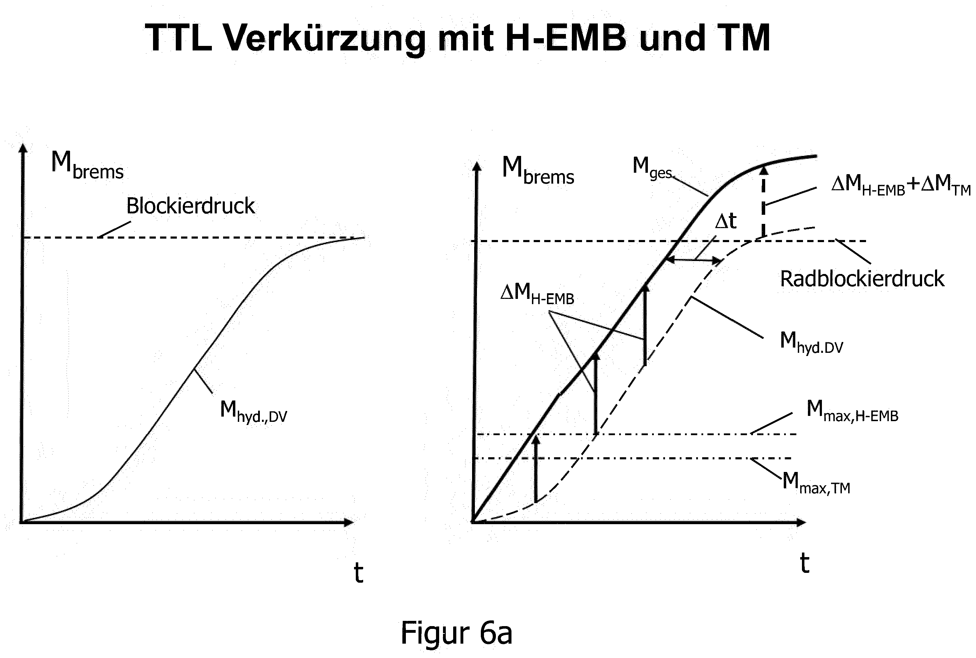

- Fig. 6a:: Momentendiagramme zur Darstellung der Bremskraftunterstützung mittels hydraulisch unterstützter elektromechanischer Bremse und Traktionsmotor;

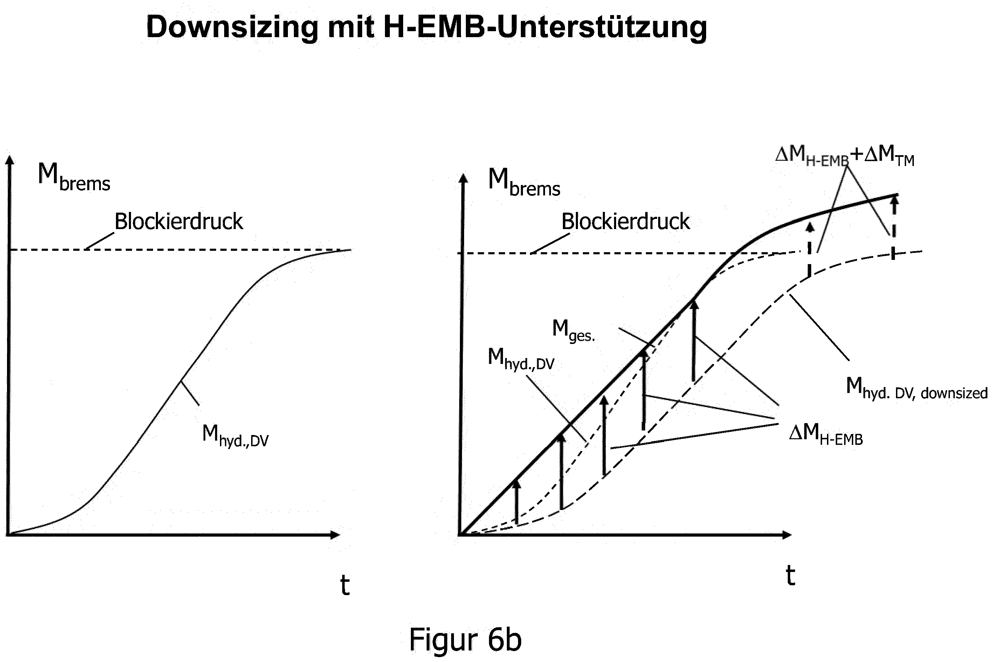

- Fig. 6b:: Momentendiagramme zur Darstellung der Downsizing-Möglichkeit der Druckversorgungseinrichtung, sofern eine Bremskraftunterstützung mittels hydraulisch unterstützter elektromechanischer Bremse und Traktionsmotor erfolgt;

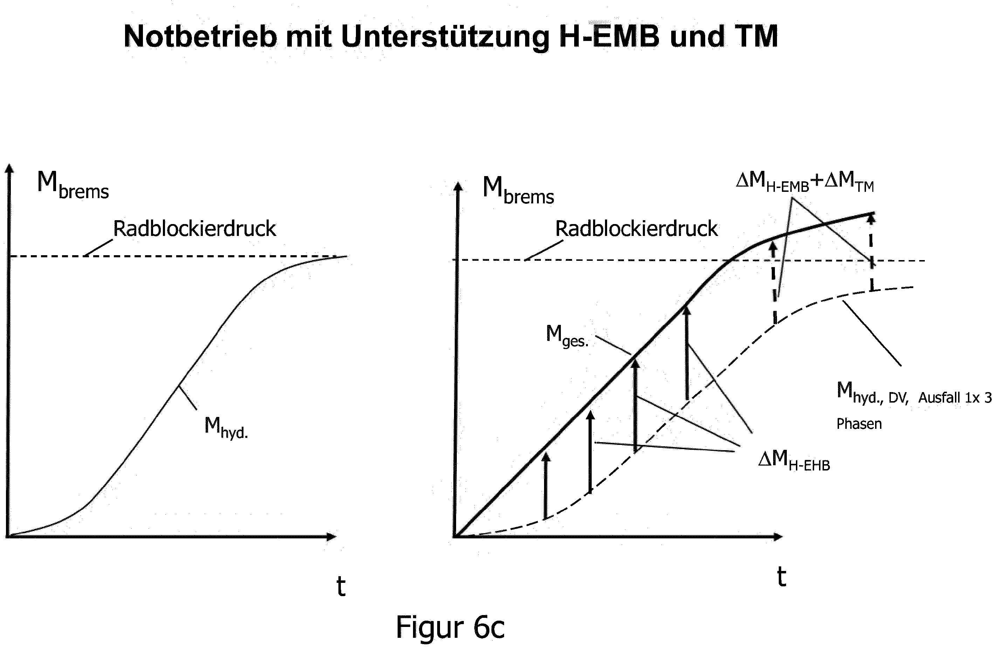

- Fig. 6c:: Momentendiagramme zur Darstellung der Bremskraftunterstützung mittels hydraulisch unterstützter elektromechanischer Bremse und Traktionsmotor im Notbetrieb bei Ausfall von Komponenten des Bremssystems;

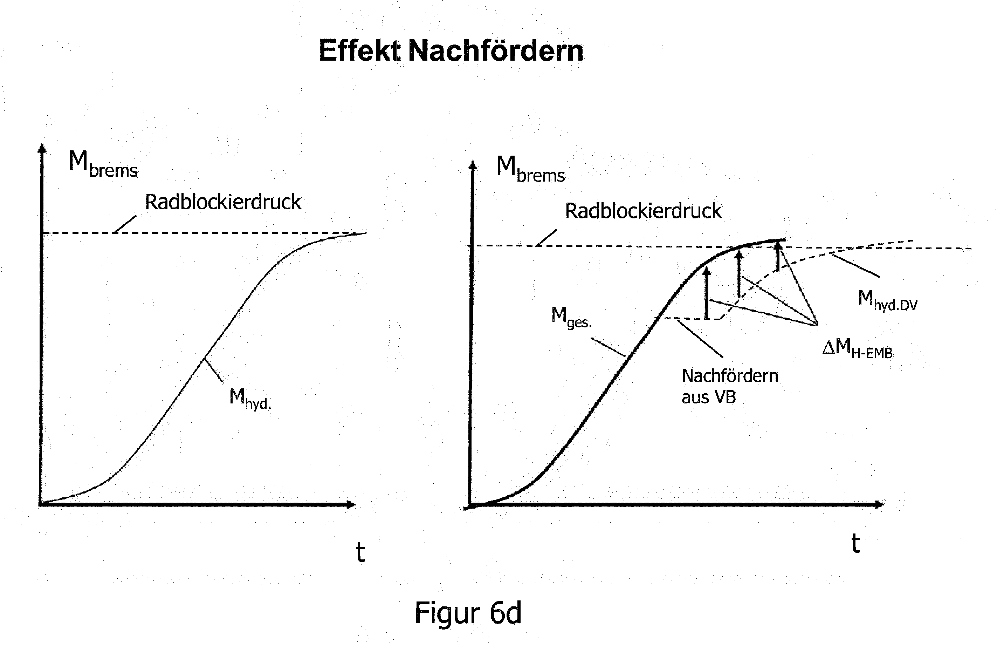

- Fig. 6d:: Momentendiagramme zur Darstellung des Bremsmomentenverlaufs während des Nachforderns von Bremsfluid mit der Bremskraftunterstützung mittels hydraulisch unterstützter elektromechanischer Bremse und Traktionsmotor;

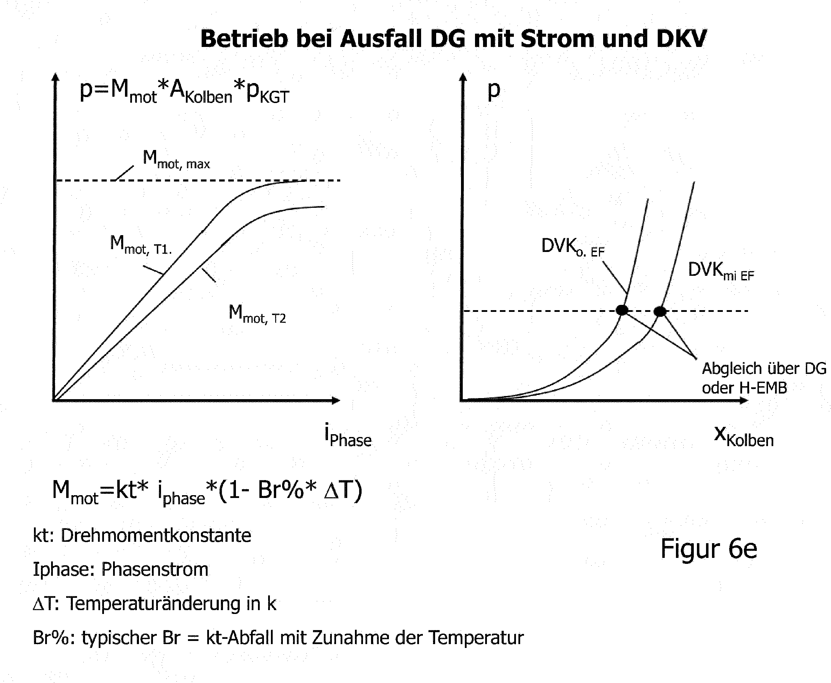

- Fig. 6e:: Bremsdruckregelung bei Ausfall des Druckgebers mittels Strom- und Temperaturmessung und Auswertung der Druck-Volumen-Kennlinie;

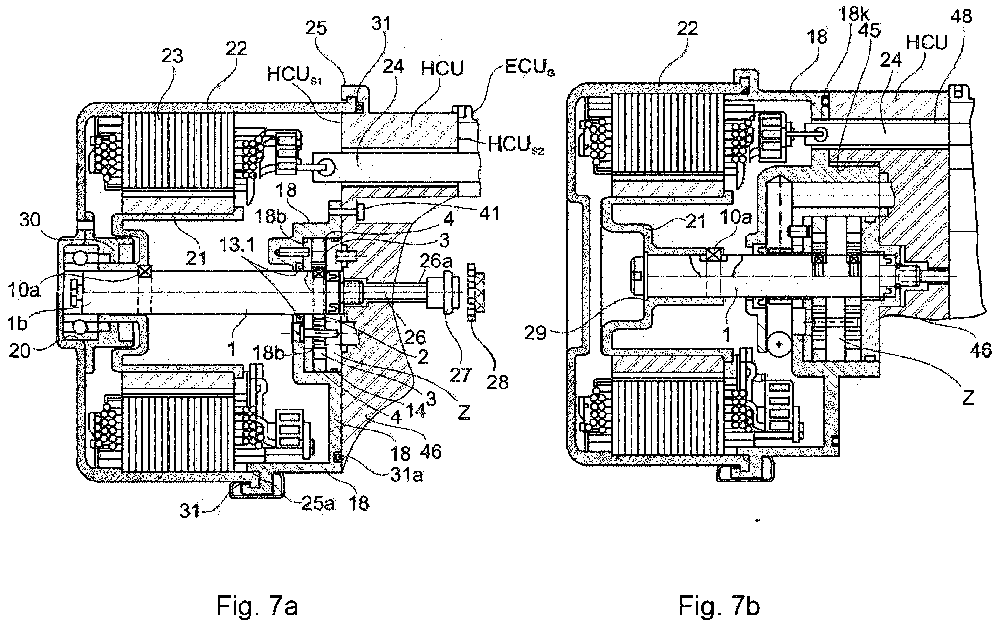

- Fig. 7a:: Baueinheit bestehend aus Elektromotor 22, einstufige Rotationspumpe Z, HCU mit Magnetventilen und ECU;
- Fig. 7b:: Baueinheit bestehend aus Elektromotor 22, zweistufige Rotationspumpe Z, HCU mit Magnetventilen und ECU.

Die Figur 1 zeigt eine schematische Darstellung einer ersten Ausführungsform des erfinderischen Bremssystems mit zwei Druckversorgungseinrichtungen DV1 und DV2, welche zur Druckversorgung der Radbremsen RB1-RB4 von Bremskreisen BK1 und BK2 bzw. einer Achse VA, HA dienen. Die Druckversorgungseinrichtungen verfügen jeweils über zwei Steuer- und Regeleinrichtungen DV ECU1 und DV ECU2 und eine Ventilanordnung R-HCU, wobei die Komponenten der Druckversorgungseinrichtungen DV1 und DV2 über jeweils zwei Bordnetze bzw. Spannungsversorgungen BN1 und BN2 versorgt. Zudem sind redundante Signalleitungen DS1, DS2 zu den Steuer- und Regeleinrichtungen (dargestellt in Fig. 5, nicht dargestellt in Fig. 1) zur zentralen Steuereinheit M-ECU vorzugsweise vorgesehen. Jede ECU dient für die Ansteuerung von jeweils einem der beiden Wicklungs- bzw. 3-Phasensysteme (1-3Ph DV-ECU1, 1x3Ph DV-ECU2) des Antriebsmotors der Druckversorgungseinrichtung DV1 und DV2). An der Hinterachse HA sind in dieser Ausführungsform zwei Traktionsmotoren TM1 und TM2 zum Antrieb und unterstützenden Bremsen der Fahrzeugräder angeordnet. Das Bremssystem weist zudem noch eine Betätigungseinrichtung BE auf, über die im Fehlerfalle ein Bremsdruck in den Radbremsen aufbaubar ist, in dieser Ausführung in den Radbremsen der Vorderachse VA. Die Traktionsmotoren TM1 und TM2 unterstützen in der Rückfallebene, d.h. Ausfall der Druckversorgung beim Bremsvorgang der Hinterachse HA. Zur Erhöhung der Ausfallsicherheit sind die Komponenten der Druckversorgungseinrichtungen DV1 und DV2 jeweils über zwei voneinander unabhängige Bordnetze BN1 und BN2 versorgt, wobei anstelle der Bordnetze auch zwei verschiedene Spannungsebenen vorgesehen werden können.

Die Figur 1a zeigt ein Prinzipschaltbild einer ersten möglichen Ausgestaltung des Bremssystems gemäß Figur 1 mit elektrischer Parkbremse EPB. Die Druckversorgungseinrichtung DV1 übernimmt die Druckversorgung für die Vorderachse VA mit den beiden Radbremsen RB1 und RB2, wobei zusätzlich eine elektrische Servolenkung EPS vorgesehen ist. Mittels der Schaltventile SV1 und SV2 sowie dem optionalen Auslassventil AV1 kann mittels der Druckversorgungseinrichtung DV1 der Druck in den Radbremsen sequentiell oder gleichzeitig eingeregelt werden. Dabei ist es möglich, dass ein Druckaufbau in der Radbremse RB1 durch Verstellen des Kolbens KB der Druckversorgungseinrichtung DV1 und ein gleichzeitiger Druckabbau in der Radbremse RB2 durch Öffnen des Auslassventils erfolgt. Die Druckregelung in den Radbremsen erfolgt bevorzugt im Multiplexbetrieb MUX und kann entweder mittels des im Bremskreis gemessenen Drucks - oder über den Motorstrom iₚₕₐₛₑ , der Position des Kolbens KB und eine Druck-Volumen-Kennlinie erfolgen. Optional kann auch die Temperatur des Motors M1 gemessen und für eine präzisere Druckregelung verwendet werden.

Entsprechendes gilt für die Druckregelung in der Hinterachse HA, die mittels der Druckversorgungseinrichtung DV2 und der Schaltventile TV, SV3 und SV4 sowie das optionale Auslassventil AV2 erfolgt. Die Druckregelung erfolgt mittels des Druckgebers p/U. Bei Ausfall des Druckgebers erfolgt die Druckregelung über den gemessenen Motorstrom iₚₕₐₛₑ, den Rotorwinkel α und optional mittels der gemessenen Motortemperatur T des Antriebsmotors M2 der Druckversorgungseinrichtung DV2.

Bei Ausfall der Druckversorgungseinrichtung kann der Druck in den Radbremsen der Vorderachse über die Betätigungseinrichtung BE erfolgen, in dem mittels des Bremspedals 1 der Kolben 3 im Zylinder 5 verstellt wird und damit Hydraulikmedium aus der Druckkammer 4 in den Bremskreis BK der Vorderachse VA gefördert wird.

Eine übergeordnet Steuereinheit M-ECU steuert die einzelnen Steuer- und Regeleinheiten der Komponenten des Bremssystems. Dies ist insbesondere für eine gesamtheitlich optimierte Fahrdynamikregelung dienlich, wo beispielsweise Synergien von Lenkung, Giermomentregelung über Bremse, Torque Vektoring über Bremse und Traktionsmotor, Zusammenwirken von Bremse und Elektromotor in der Fahrzeugverzögerung erzielt werden können.

Die Druckversorgungseinrichtungen DV1 und DV2 weisen jeweils redundante Steuer- und Regeleinheiten DV1-ECU und DV2-ECU auf, die die getrennten Wicklungssysteme bzw. Phasensystem der Antriebsmotoren separat ansteuern, so dass auch bei Ausfall eines Wicklungssystems eines Motors M1, M2 oder einer Steuer- und Regeleinheit die jeweilige Druckversorgungseinrichtung noch mit verminderter Leistung zur Druckregelung genutzt werden kann.

Die Figur 1b zeigt ein Prinzipschaltbild einer zweiten möglichen Ausgestaltung des Bremssystems gemäß Figur 1. Dabei sind die Radbremsen RB3 und RB4 der Hinterachse HA durch hydraulisch unterstützte elektromechanische Bremsen H-EMB gebildet, mit denen im Regelbetrieb nicht nur mittels der Druckversorgungseinrichtung DV2 sondern auch mittels des eigenen Elektroantriebes ein Bremsmoment erzeugt werden kann. Diese kann unterstützend beim Bremsen, Torque Vektoring, Giermomentenregelung oder bei Totalausfall der Bremse genutzt werden. Zudem kann noch mittels des Traktionsantriebes TM1 eine Verzögerung der Fahrzeugräder unterstützend oder allein generiert werden. An der Vorderachse VA ist ebenfalls ein Traktionsantrieb TM2 sowie eine elektrische Servolenkung EPS mit zugehörigen Steuer- und Regeleinheiten EPS-ECU und TM-ECU angeordnet. Sämtliche Komponenten des Bremssystems werden durch die zentrale Steuereinheit M-ECU gesteuert.

Die Figur 2 zeigt eine schematische Darstellung einer zweiten möglichen Ausführungsform des erfinderischen Bremssystems mit zwei Druckversorgungseinrichtungen DV1 und DV2, welche zur Druckversorgung jeweils einer Achse VA, HA jeweils eine Steuer- und Regeleinrichtung DV-ECU1 und DV-ECU2 und eine gemeinsame Ventilsteuereinheit R-HCU bzw. VM-ECU aufweisen, wobei jede Komponente der Druckversorgungseinrichtungen DV1 und DV2 über jeweils zwei Bordnetze bzw. Spannungsversorgungen oder Spannungspegel versorgt ist. R-HCU umfasst die Magnetventile des Radbremsregelung, VM-ECU umfasst die Ventilschaltung, die dafür sorgt, dass entweder die Bremskreise miteinander verbindbar, voneinander trennbar und/oder einer oder beide Bremskreise mit dem Vorratsbehälter verbindbar sind.

Die Figur 3 zeigt eine schematische Darstellung einer dritten möglichen Ausführungsform des erfinderischen Bremssystems mit zwei Druckversorgungseinrichtungen DV1 und DV2, welche zur Druckversorgung jeweils der Radbremsen einer Achse VA, HA vorgesehen sind, wobei diese jeweils zwei Steuer- und Regeleinrichtungen DV-ECU1 und DV-ECU2 und eine Ventilanordnung mit Steuereinheit R-HCU aufweisen, wobei jede Komponente der Druckversorgungseinrichtung über jeweils zwei Bordnetze bzw. Spannungsversorgungen BN1 und BN2 versorgt ist und beide Bremskreise über ein Verbindungsmodul VM miteinander verbindbar oder trennbar sind. Anstatt einer Betätigungseinrichtung BE, bei der über das Bremspedal hydraulisch Druck in den Radbremsen aufbaubar ist, besitzt das Bremssystem gemäß Figur 3 ein elektronisches Bremspedal, womit ein break-by-Wire-Bremssystem gegeben ist. Die Signale des elektronischen Bremspedals werden von der zentralen Steuereinheit M-ECU verarbeitet und die Komponenten des Bremssystems entsprechend angesteuert.

Die Figur 3a zeigt ein Prinzipschaltbild einer ersten möglichen Ausgestaltung des Bremssystems gemäß Figur 3. Das Verbindungsmodul VM weist ebenfalls eine Steuereinheit VM-HCU auf und weist eine Ventilschaltung auf, die gewährleistet, dass wahlweise die Bremskreise von Vorderachse VA und Hinterachse HA voneinander getrennt oder miteinander verbunden sind oder einer oder beide Bremskreise mit der Kammer K1 des Vorratsbehälters VB in hydraulischer Verbindung ist. Die Druckregelung in den Radbremsen kann entweder unter Verwendung der Druckgeber p/U oder über die Strommessung und Verwendung der Druckvolumenkennlinie erfolgen. Der Druckabbau in den Radbremsen RB2 und RB3, aber auch RB1 und RB4 durch Öffnen der Schaltventile SV1 bis SV4 kann optional auch über die optionalen Auslassventile AV1 und AV2 erfolgen.

Das Bremssystem gemäß Figur 3b unterscheidet sich von dem in Figur 3a dargestellten lediglich dadurch, dass keine Auslassventile AV vorgesehen sind. Hierzu muss der Antriebsmotor der Druckversorgung hochdynamisch ausgelegt sein, z.B. in der Form eines Motors mit doppelten Luftspalt (US 7872389 B2) bzw. weitere Bremskraft erzeugende Aggregate wie z.B. Traktionsmotoren, H-EMB (nicht gezeichnet) in der Bremskraftregelung mit eingebunden sein.

Die Figur 3c zeigt das Bremssystem gemäß Figur 3b mit dem Fehlerfall, das bei der Druckversorgungseinrichtung DV2 eine Phasenwicklung des Motors nicht mehr angesteuert werden kann. In diesem Fall kann die Druckregelung jedoch durch die redundant vorgesehenen Wicklungssysteme und Steuer- und Regeleinheiten der Druckversorgungseinrichtungen weiter mit diesen betrieben werden. Allerdings kann die Druckversorgungseinrichtung DV2 für die Radbremsen RB3 und RB4 nicht mehr den maximalen Bremsdruck und auch nicht mehr mit der hohen Dynamik einregeln. In diesem Fall kann das Drehmoment des Traktionsantriebes TM der Hinterachse genutzt werden, um ein zusätzliches Bremsmoment zu erzeugen, wodurch trotz halbem Drehmoment der Druckversorgereinrichtung noch der Blockierdruck bzw. maximale Verzögerung erreicht werden kann. Die Leistung ist jedoch eingeschränkt, sodass die individuelle Radregelung in diesem Fall eine schlechtere Performance hat und sich der Bremsweg insbesondere bei Betrieb auf hohen Fahrbahnreibwerten im ABS-Betrieb sich erhöht. In jedem Fall kann eine hohe Sicherheit und Regelgüte erreicht werden, die den aktuellen Systemen der Stufe HAD überlegen ist.

Die Figur 3d zeigt den Fehlerfall F2, bei dem die Druckversorgungseinrichtung der Hinterachse HA total ausgefallen ist. In diesem Fehlerfall werden die Bremskreise über das Verbindungsmodul miteinander verbunden und die Druckversorgungseinrichtung DV2 der Vorderachse übernimmt die Druckregelung, vorzugsweise im Multiplex-Betrieb für alle Radbremsen RB1-RB4. Auch kann in diesem Fehlerfall die Bremskraft der Traktionsantriebe TM zur Verzögerung des Fahrzeuges genutzt werden. Wie in Figur 3c ausgeführt, führt dieser Fehlerfall zu Leistungseinbußen, jedoch keine zu Sicherheitsrisiken.

Die Figur 3e zeigt das Nachfördern von Bremsmedium aus der Kammer K2 in die Druckversorgungseinrichtung DV1, in dem der Kolben KB nach rechts verstellt bzw. zurückgezogen wird. Durch Verschließen der Schaltventile SV1 und SV2 bei geöffnetem Trennventil TV2 kann dann das Medium über das Verbindungsmodul aus der Druckversorgungseinrichtung DV1 in die Kammer K1 des Vorratsbehälters VB gedrückt werden, um diese wieder aufzufüllen bzw. kann alternativ aus dieser Kammer des Vorratsbehälters nachgefördert werden. Somit ergibt sich eine weitere Redundanz.

Die Figur 4a zeigt eine Querschnittsdarstellung durch eine hydraulisch unterstützte elektromechanische Bremse H-EMB, welche über einen Hydraulikanschluss HL-DV1 mit der Druckversorgungseinrichtung DV1 verbindbar ist, so dass entweder über die Hydraulik und/oder den Elektromotor EM eine Kraft auf die Bremsscheiben aufbringbar ist. Die rotorische Bewegung des Elektromotors wird hierbei über ein Getriebe G in eine lineare Bewegung übertragen und erzeugt die Kraft F_{EM} auf die Radbremse. Das Getriebe G ist vorzugsweise selbsthemmend ausgeführt, so dass im Stillstand bei Ausfall des Bordnetzes die Parkbremse sicher funktioniert. Zusätzlich zum Elektromotor wird über die Druckversorgung eine hydraulische Kraft F_{hyd} erzeugt. Je nach Ausführung des EM als Bürstenmotor oder bürstenloser Motor, mit geringer oder höherer Leistung, kann die Dynamik der Bremsmomentänderung und das zusätzlich verfügbare Bremsmoment durch die H-EMB durch entsprechende Gestaltung der Komponenten festgelegt werden und auf die hydraulische Bremse abgestimmt werden.

Die Figur 4b zeigt eine mögliche Ventilschaltungen und deren Funktion zur Druckregelung in den vier Radbremsen RB1 bis RB4 entsprechend der Ventilschaltung von Figur 3a (nur AV an Radbremse RB2 ausgeführt, nicht an RB3). Dabei erfolgt der Druckaufbau und Druckabbau in den Radbremsen vorzugsweise über die Druckversorgungseinrichtung DV1 bei jeweils geöffneten Schaltventilen SV1 bzw. SV2 in die Radbremsen RB1 und RB2, sowie über die DV2 bei jeweils geöffneten Schaltventilen SV3 und SV4 in die Radbremsen RB3 und RB4. Geregelt wird entweder mit Druck als Regelgröße unterstützt mit dem PPC-Verfahren, z.B. durch geeignete Vorsteuerung, bzw. bei Nichtverfügbarkeit eines Druckgebers ausschließlich durch das PPC-Verfahren, Zusätzlich kann der Druck der Radbremse RB2 über das Auslassventil AV in den Vorratsbehälter VB abgelassen werden, z.B. durch PWM-Steuerung des AV-Ventils wobei in diesem Fall AV geöffnet ist und SV2 geschlossen ist. Gleichzeitig kann über die DV1 ein Druckaufbau in RB1 durch Öffnen des Schaltventiles SV1 erfolgen. Auch ist eine Kombination des PPC-Verfahrens mit der PWM-Steuerung ein mögliches Steuerverfahren. Hierbei sind beide Schaltventile SV1 und SV2 geöffnet bzw. ein Schaltventil oder beide Schaltventile werden im PWM-Verfahren getaktet und Auslassventil AV ist entweder geöffnet oder wird ebenfalls getaktet. Dieses Verfahren ist eine Alternative zum bekannten Multiplex-Verfahren, wo Schaltventile digital geöffnet oder geschlossen werden und der Druckabbau sequentiell oder simultan erfolgt und baut auf dem Verfahren in DE 102015103858 auf. Die Ventilschaltung ist durch weitere Auslassventile erweiterbar (1 AV jeweils in RB 3 vgl. Figur 3a, oder AV-Ventile an dreien oder allen Radbremsen in allen Radbremsen), sofern weitere Freiheitsgrade beim Druckabbau erforderlich sind. Die Schaltventile SV1-4 sind derart angeordnet und ausgebildet, dass sie durch den in den Radbremsen eingeschlossenen Druck selbständig öffnen. Damit ist sichergestellt, dass auch bei Ausfall des kompletten Systems kein Bremsdruck im Rad eingesperrt ist.

Die Figur 4c zeigt eine Ausführungsform einer Betätigungseinrichtung BE mit Bremspedal 1, Stößel 2, Kolben 3, Zylinder 5 und Pedalgefühlsimulator 6 zum Druckaufbau in einem oder mehreren Bremskreis(en) BK1 bzw. BK2. Der Kolben 3, der drei Dichtungen D1, D2, D3 im Zylinder 5 aufweist, wird über den Stößel 2 vom Bremspedal 1 nach links verstellt, wodurch im Druckraum 4 ein Druck aufgebaut bzw. ein Druckvolumen über die Hydraulikleitung HL in die Bremskreise BK1/BK2 gefördert wird. Zusätzlich sind noch redundante Dichtungen im Zylinder sowie jeweils parallele hydraulische Leitungen VLDR, VLVB zum Vorratsbehälter VB jeweils zwischen den Dichtungen D1, D2, D3 vorgesehen, wobei eine hydraulische Leitung VL_{DR} eine Drossel DR aufweist. Damit kann sicher der Ausfall von einer Dichtung D1-D3 sicher diagnostiziert werden und es steht eine zuverlässige Betätigungssystem mit Pedalgefühlsimulator und Dichtungssystem mit Mehrfachredundanz sowie Druckerzeugungsmöglichkeit bei Ausfall der elektromotorischen Druckversorgungseinrichtung zur Verfügung.

Die Figur 5 zeigt eine mögliche Ausführungsform einer Druckversorgungseinrichtung DV1 mit zwei Steuer- und Regeleinrichtungen DV-ECU1 und DV-ECU2. Die Druckversorgungseinrichtung weist einen Elektromotor M1 auf, dessen Rotor R eine Spindel SP verstellt, welche mit einem Kolben KB in Verbindung ist. Durch das Verstellen des Kolbens KB kann ein Druck im Druckraum DR aufgebaut werden, welche über das Trennventil TV in einen Bremskreis BK geleitet werden kann. Der Kolben ist über mehrere redundante Dichtungen im Zylinder abgedichtet, wobei wie bei der Betätigungseinheit BE ein redundantes diagnostizierbares Dichtungssystem geschaffen wird. Auch bei der Druckversorgungseinrichtung führt zwischen den Dichtungen je eine Hydraulikleitung zum Vorratsbehälter führt. Somit ist die Druckversorgung auch bei Ausfall einer Dichtung noch voll betriebsfähig und redundant. Über ein Rückschlagventil ist der Druckraum DR mit dem Vorratsbehälter verbunden. Somit kann die Druckversorgung nachfördern. Jede der beiden Steuer- und Regeleinrichtungen DV-ECU1 und DV-ECU2 sind über 1x3 Phasenleitungen mit jeweils getrennten Wicklungs- bzw. Phasensystemen des Motors M1 in Verbindung, so dass bei Ausfall einer Steuer- und Regelungseinrichtung bzw. eines Wicklungssystem der Motor M1 noch über das andere Wicklungs- bzw. Phasensystem und die andere Steuer- und Regeleinrichtung betrieben werden kann, auch wenn dann nur noch ca. das halbe Drehmoment mittels des Antriebes M1 erzeugbar ist. Eine oder beide Steuer- und Regeleinrichtung(en) weist bzw. weisen Sensoren zur Ermittlung der Temperatur T, des Motorstroms i sowie des Rotorwinkels des Elektromotors α auf. Zur Erzielung einer hohen Verfügbarkeit sind nicht nur die Steuer- und Regeleinrichtungen DV-ECU redundant ausgebildet, sondern auch Stromversorgungen BN1, BN2 sowie Daten- und Steuerleitungen DS1 und DS2 doppelt vorgesehen. Die Stromversorgungen BN1 und BN2 können z.B. unterschiedliche Spannungsniveaus eines Bordnetzes oder getrennte Bordnetze sein.

Die Figur 6a zeigt Momentendiagramme zur Darstellung der Bremskraftunterstützung mittels hydraulisch unterstützter elektromechanischer Bremse H-EMB und Traktionsmotor TM. Im linken Diagramm ist der Momentenverlauf M_{hyd,DV1}, welcher allein mittels der Druckversorgungseinrichtung DV1 erzielbar ist, dargestellt. Im rechten Diagramm ist der Momentenverlauf dargestellt, wie mittels Hinzunahme der hydraulisch unterstützen elektromechanischen Brems H-EMB und eines Traktionsmotors TM erzielbar ist. Es steht ein maximales Drehmoment M_{max, H-EMB} von H-EMB bzw. M_{max,TM} des Traktionsmotors zur Verfügung. Durch das zusätzlich durch Traktionsmotor TM erzeugt Bremsmoment M_{max,TM} sowie das mittels der H-EMB erzeugte Bremsmoment ΔM_{H-EMB} wird der Blockierdruck (horizontale gestrichelte Linie) um **die** Zeitspanne Δt eher erreicht. Auch kann ein deutlich größeres Bremsmoment erzeugt werden.

Die Figur 6b zeigt die Möglichkeit des Downsizings der Druckversorgungseinrichtung DV1 auf, sofern die Bremswirkung der hydraulisch unterstützten Bremse (H-EMB) gemäß Figur 4a bei der Druckregelung mit einbezogen wird. So sollte die Druckversorgungseinrichtung DV1 nicht hinsichtlich ihres maximal aufbaubaren Druckes reduziert werden, sondern hinsichtlich ihrer Dynamik, womit der Elektromotor günstiger herstellbar ist.

Die Figur 6c zeigt Momentendiagramme zur Darstellung der Bremskraftunterstützung mittels hydraulisch unterstützter elektromechanischer Bremse H-EMB und Traktionsmotor TM im Notbetrieb bei Ausfall eines Wicklungs- bzw. Phasensystems 1x3 Phasen des Antriebs M1. Durch den Wegfall eines Wicklungssystems kann die Druckversorgung DV1 nicht mehr den erforderlichen Druckaufbau bis zum Blockierdruck aufbauen und ist auch nicht mehr dynamisch genug. Durch die Verwendung der hydraulisch unterstützten elektromechanischen Bremse H-EMB sowie des bzw. der Traktionsmotor(en) kann die erforderliche Dynamik und der benötigte Bremsdruck aufgebaut werden (rechtes Diagramm).

Die Figur 6d zeigt Momentendiagramme zur Darstellung des Bremsmomentenverlaufs M_{brems} während des Nachförderns von Bremsfluid. Während des Nachfördern aus dem Vorratsbehälter VB kann mittels der Druckversorgungseinrichtung DV1 kein weiterer Bremsdruck aufgebaut werden. Durch die Hinzunahme der Bremsmomente M_{max,TM} des Traktionsmotors TM sowie das mittels der H-EMB erzeugte Bremsmoment ΔM_{H-EMB} kann auch während des Nachförderns das Bremsmoment M_{brems} weiter erhöht werden, wodurch die Dynamik des Systems deutlich verbessert wird.

Die Figur 6e zeigt eine Bremsdruckregelung bei Ausfall des Druckgebers DG, wobei dann mittels Strommessung des Motorstroms iₚₕₐₛₑ und Auswertung der Druck-Volumen-Kennlinie eine Regelung des Motormomentes M_{Mot} und damit der Regelung des Drucks p vorgenommen wird. Dabei wird auch die Motortemperatur T berücksichtigt, da unter Temperatur sich die Drehmomentkonstante reduziert und somit einen Einfluss auf den Proportionalitätsfaktor kt * (1-Br%*ΔT) zwischen Motormoment M_{Mot} und Motorstrom iₚₕₐₛₑ hat. Hierdurch ergibt sich vorteilhaft eine Redundanz der Druckmessung. So kann auch auf einen Druckgeber verzichtet werden. Die Kalibrierung der Regelung erfolgt dabei durch den Druckgeber und es wird primär mit Strom, Weg und Druckvolumenkennlinie geregelt werden.

Es ist jedoch ebenso möglich, dass der Druck über den Motorstrom des Antriebes der Druckversorgungseinrichtung eingestellt wird, da das Drehmoment des Motors und der Motorphasenstrom zueinander proportional sind.

Die **Fig. 7a** zeigt eine Darstellung einer gesamten Baueinheit bestehend aus Motor 22, Pumpe Z, HCU und ECU, welche in der Lage ist, die Druckregelung für hydraulische Stellaktuatoren, insbesondere hydraulische Radbremsen oder hydraulisch-elektromechanischen Radbremse (H-EMB) auszuüben. Hierbei soll im Wesentlichen die Kombination Motor mit Pumpe dargestellt werden. Im Lagerflansch 18 ist die Pumpe angeordnet oder in einem separaten Pumpengehäuse 40, wie es in der oberen Bildhälfte dargestellt ist an HCU oder ECU befestigt. In **Fig. 7a** ist eine Version gezeigt, welche ein zusätzliches Motorlager 20 benötigt, in welchem die Welle 1 gelagert ist. Der Motor setzt sich wie üblich zusammen aus Rotor 21, welcher über den Mitnehmer 10a mit der Welle 1 verbunden ist. Der Rotor 21 wird über einen Permanentmagneten im Gehäuse 30 durch seine Kraft axial vorgespannt. Dies ist eine Lösung für den Motorhersteller, welcher Motor mit Gehäuse 22 und Stator und Wicklung 23 fertigt, prüft und an den Systemlieferanten zuliefert. Hierbei wird der Motor ohne Pumpe mit einer Hilfswelle geprüft. Danach wird bei Ausbau der Welle der Rotor durch die axiale Magnetkraft zentriert, so dass anschließend bei der Endmontage die Welle 1 mit dem Rotor zusammengebaut werden kann. Das Antriebsgehäuse muss hier zusätzlich mit dem Flansch 18 bei 25a - in der unteren Bildhälfte dargestellt - zusammengefügt und befestigt werden, z. B. mit Federn, welche segmentförmig über drei Verbindungen aufgesteckt werden. Hierbei ist auch eine Gehäusedichtung 31 notwendig. Die Befestigung kann durch Verstemmen, bei 25 von Motorflansch mit HCU oder ECU, siehe obere Bildhälfte 28, erfolgen. Hier ist die Version Pumpe mit Pumpengehäuse dargestellt. Der Motor ist hier als bürstenloser Motor dargestellt, der einen Motorsensor für die Kommutierung und Steuerung der Volumenförderung der Pumpe braucht. Dieser Motorsensor ist entfernt vom Antriebsgehäuse 22 angeordnet, wobei eine Sensorwelle 26, welche an der Antriebswelle 1 angeordnet bzw. befestigt ist, ein Sensortarget 27 trägt. Dieses Target 27 wirkt auf das Sensorelement 28, welches auf der Leiterplatte der ECU angeordnet ist. Die Wicklung ist über Kontaktschienen 24 mit der ECU verbunden.

Der Motor mit Lagerflansch 18 kann direkt mit dem Hydraulikgehäuse HCU, welches Ventile oder sonstige hydr. Komponenten beinhaltet, mit der Pumpe verbunden werden. Wenn dies nicht der Fall ist, so bietet sich eine Verbindung des Antriebsgehäuses 22, 18 direkt mit dem Gehäuse der ECU an.

Es ist ebenso möglich, die Zahnradpumpe Z in einem Pumpengehäuse 40 anzuordnen, welches direkt mit Hydraulikgehäuse HCU verbunden wird, wie es in **Figur 7a** in der oberen Hälfte der Antriebswelle 1 dargestellt ist. Vor dem Zusammenbau von Pumpengehäuse 40 und Hydraulikgehäuse HCU bzw. Pumpengehäuse 40 und ECU wird zunächst die Zahnradpumpe Z im Pumpengehäuse 40 integriert bzw. montiert, wobei anschließend der Rotor 21 auf die Welle 1 aufgepresst und anschließend mit dem Lager 20 zusammengebaut wird. Hierbei kann die Zugkraft des Magneten 30 zusätzlich auf den Rotor 21 und das Lager 20 wirken, womit das Lager wie ein Vierpunktlager wirkt. Damit ist das Motorgehäuse 22 mit der Zahnradpumpe Z und deren Pumpengehäuse 40 verbunden und kann im nächsten Schritt mit dem Hydraulikgehäuse HCU bzw. dem Elektronikgehäuse ECU verbunden werden. Dazu wird die Befestigungsschraube 41 verwendet. Die Welle 1 ist zuvor in den Außenscheiben 7.1 und 7.2 zentriert, so dass das Pumpengehäuse 40 vor der Verschraubung mit dem Hydraulikgehäuse HCU bzw. dem Elektronikgehäuse ECU mit der Welle 1 zentriert ist.

Die Druckversorgungseinrichtung gemäß **Fig. 7b** verwendet eine 2-stufige Pumpe mit langer Gleit- oder Wälzlagerung, welche keine getrennte Motorlagerung erfordert. Dementsprechend ist der Motoraufbau mit Gehäuse vereinfacht. Der Rotor 21 sitzt mit Mitnehmer 10a auf der Motorwelle und ist axial mit dem Sicherungsring verbunden. Das Pumpengehäuse ragt hier etwas in die HCU hinein.

Ausführungsbeispiele - nicht zwingend gemäß der Erfindung - sind weiterhin im folgenden offenbart:
1. Bremssystem für ein Fahrzeug, folgende Komponenten aufweisend:
   - mindestens zwei hydraulische Bremskreise (BK1, BK2) mit jeweils mindestens einer hydraulisch wirkenden Radbremse (RB1, RB2, RB3, RB4),
   - mindestens zwei Druckversorgungseinrichtungen (DV1, DV2), die jeweils von einem elektromotorischen Antrieb (M1, M2) angetrieben sind,
   - mindestens einer Ventilanordnung (HCU) mit Ventilen zum radindividuellen Einstellen von Bremsdrücken und/oder zum Trennen bzw. Verbinden der Radbremsen (RB1, RB2, RB3, RB4) mit einer Druckversorgungseinrichtung (DV1, DV2)
   - mindestens einer elektronischen Steuer- und Regeleinheit, wobei eine davon eine übergeordnete zentrale Steuereinheit (M-ECU) ist, die die einzelnen Steuer- und Regeleinheiten der Komponenten des Bremssystems steuert,
   - sowie mindestens ein zusätzlicher elektrischer Antriebsmotor (TM1, TM2) für mindestens eine Achse oder Rad des Fahrzeugs vorgesehen ist, welcher zum Antrieb und Abbremsen der Achse bzw. des Rades genutzt wird,
      dadurch gekennzeichnet, dass
   - das Bremssystem für Lenkungseingriffe (Torque-Vectoring) die mindestens eine Druckversorgungseinrichtung (DV1, DV2) zur Druckregelung in mindestens einer Radbremse (RB) und/oder den mindestens einen elektrischen Antriebsmotor (TM1, TM2) nutzt, wobei zudem
   - mindestens eine Druckversorgungseinrichtung (DV1, DV2) zwei voneinander unabhängige elektronische Steuer- und Regeleinheiten (ECU1, ECU2) oder eine zweifach-redundante Steuer- und Regeleinheit (DV1-ECU, DV2-ECU) zur Ansteuerung ihres elektromotorischen Antriebs (MI, M2) aufweist,
      und/oder
   - jede Druckversorgungseinrichtung (DV1, DV2) jeweils einem Bremskreis (BK1, BK2) für den Regelbetrieb des Bremssystems zugeordnet ist, und dass ein Verbindungsmodul (VM) zur wahlweisen Verbindung der Bremskreise (BK1, BK2) vorgesehen ist, derart, dass bei Ausfall einer Druckversorgungseinrichtung (DV1, DV2) die Druckversorgung bzw. Druckregelung für beide Bremskreise (BK1, BK2) durch die andere noch funktionierende Druckversorgungseinrichtung (DV1, DV2) erfolgt.
2. Bremssystem nach Ausführungsbeispiel 1, dadurch gekennzeichnet, dass mindestens eine, insbesondere jede, elektronische Steuer- und Regeleinheit (ECU1, ECU2) voneinander getrennte Wicklungen des bzw. eines elektromotorischen Antriebs (MI, M2) ansteuert.
3. Bremssystem nach Ausführungsbeispiel 1 oder 2, dadurch gekennzeichnet, dass entweder jeder Druckversorgungseinrichtung (DV1, DV2) jeweils eine, insbesondere redundante, Ventilanordnung (R-HCU) oder zwei Druckversorgungseinrichtungen (DV-ECU1, DV-ECU2) eine redundante Ventilanordnung (R-HCU) zugeordnet ist, wobei die eine redundante Ventilanordnung (R-HCU) derart ausgeführt ist, dass bei Ausfall einer oder beider Steuer- und Regeleinheiten ECU der Druckversorgungseinrichtung (DV1, DV2, DV-ECU1, DV-ECU2) die Magnetventile der Druckversorgung noch betätigt werden können, insbesondere über die zentrale Steuereinheit oder die Elektronik eines anderen Moduls gesteuert werden können.
4. Bremssystem nach Ausführungsbeispiel 3, dadurch gekennzeichnet, dass die Druckversorgungseinrichtung (DV1, DV2) zusammen mit der Ventilanordnung (R-HCU) und der mindestens einen, der Druckversorgungseinrichtung zugeordneten elektronische Steuer- und Regeleinheit zu einem Modul bzw. Baugruppe zusammengefasst sind.
5. Bremssystem nach einem der vorhergehenden Ausführungsbeispiele, dadurch gekennzeichnet, dass das Bremssystem eine Betätigungseinrichtung (BE), insbesondere in Form eines Pedalgefühlsimulator, zur Erfassung des Fahrerwunsches aufweist, und dass die Betätigungseinrichtung (BE) eine eigene Baugruppe bildet, welche an der Spritzwand des Fahrzeuges befestigt ist.
6. Bremssystem nach Ausführungsbeispiel 5, dadurch gekennzeichnet, dass die Betätigungseinrichtung (BE) eine, insbesondere mittels eines Bremspedals (1), betätigbare Kolben-Zylinder-Einheit (HZ) mit einem Kolben aufweist, die mit mindestens einem hydraulischen Bremskreis (BK1, BK2), insbesondere dem Bremskreis mit den Radbremsen der Vorderachse (VA), verbunden bzw. verbindbar ist.
7. Bremssystem nach Ausführungsbeispiel 6, dadurch gekennzeichnet, dass die Betätigungseinrichtung (BE) einen hydraulischen Wegsimulator, einen Kolben (3), einen Arbeitsraum (4) mindestens zwei Wegsensoren (WS1, WS2) sowie drei Dichtungen (D1, D2, D3) aufweist, wobei jeweils zwischen zwei Dichtungen jeweils eine hydraulische Leitung (VUb, VLdr) zum Vorratsbehälter (VB) führt und zumindest in einer hydraulischen Leitung (VLdr) eine Drossel (DR) angeordnet ist.
8. Bremssystem nach einem der vorhergehenden Ausführungsbeispiele, dadurch gekennzeichnet, dass das Bremssystem im Regelbetrieb mit geschlossenem Bremskreis, d.h. im Regelbetrieb erfolgt kein Druckabbau über Magnetventile in den Vorratsbehältnis, betrieben wird und/oder der Druck in den Radbremsen (RB1-RB4) des jeweiligen Bremskreises (BK1, BK2) im Multiplexverfahren und/oder gleichzeitig eingeregelt bzw. eingestellt wird.
9. Bremssystem nach einem der vorhergehenden Ausführungsbeispiele, dadurch gekennzeichnet, dass jede Radbremse (RB1, RB2, RB3, RB4) ein Schaltventil (SV1, SV2, SV3, SV4) aufweist, welche insbesondere als stromlos offene Kugelsitzventile ausgebildet sind, und die derart an die Radbremsen angeschlossen sind, dass im bestromten Zustand der Schaltventile der Druck in der bzw. den jeweiligen Radbremse(n) der Druck gehalten wird und die sich im unbestromten Zustand durch den Druck in der Radbremse selbstständig öffnen.
10. Bremssystem nach einem der vorhergehenden Ausführungsbeispiele, dadurch gekennzeichnet, dass zusätzlich zu den Schaltventilen (SV1, SV2, SV3, SV4) an mindestens einer Radbremse (RB1, RB2, RB3, RB4) ein Auslassventil (AV) zum Druckabbau in den Vorratsbehälter (VB) angeschlossen ist, wobei ein Druckabbau im Regelbetrieb, insbesondere bei sehr hohen Druckdynamikanforderungen z.B. bei high-µ-ABS-Regelung insbesondere bei Ausfall einer Druckversorgung DV1, DV2 bzw. einer ECU einer Druckversorgung in einer Radbremse (RB1-RB4) über das Öffnen eines Auslassventils (AV) in den Vorratsbehälter (VB), insbesondere im erweiterten Multiplexbetrieb (sog. MUX 2.0-Verfahren), bei dem eine Druckversorgungseinrichtung (DV1, DV2) für alle Radbremsen (RB1-RB4) die Druckregelung übernimmt, erfolgt.
11. Bremssystem nach einem der vorhergehenden Ausführungsbeispiele, dadurch gekennzeichnet, dass mindestens eine Radbremse, vorzugsweise zwei Radbremsen, eine hydraulisch unterstützte elektromechanische Bremse (H-EMB), eine elektrische Parkbremse (EPB) oder eine elektromechanische Bremse (EMB) ist oder neben der Radbremse (RB1-RB4) eine zusätzliche Parkbremse (EPB) oder elektromechanische Bremse (EMB) auf das Rad abbremsend einwirkt.
12. Bremssystem nach einem der vorhergehenden Ausführungsbeispiele, dadurch gekennzeichnet, dass der mindestens eine elektrische Antriebsmotor (TM1, TM2) zur Rekuperation beim Bremsen genutzt wird, und dass mehrere Antriebsmotoren (TM1, TM2) für mindestens eine Achse oder jeweils ein Antriebsmotor für ein Rad zumindest an einer Achse des Fahrzeugs vorgesehen ist bzw. sind und für das Abbremsen einer Achse oder eines Rades genutzt wird bzw. werden.
13. Bremssystem nach einem der vorhergehenden Ausführungsbeispiele, dadurch gekennzeichnet, dass die übergeordnete Steuerungseinheit (M-ECU) beim Bremsen, insbesondere mit Rekuperation, das mittels der Radbremsen (RB1-RB4) zu erzeugende Bremsmoment bestimmt und die elektronischen Steuer- und Regeleinheiten (ECU1, ECU2) der Druckversorgungseinrichtungen (DV1, DV2) entsprechend ansteuert und/oder den mindestens einen elektrischen Antriebsmotor (TM1, TM2) zum Aufbau eines zusätzlich zu den von den Radbremsen (RB1-RB4) erzeugten Bremsmomentes ansteuert bzw. verwendet.
14. Bremssystem nach einem der vorhergehenden Ausführungsbeispiele, dadurch gekennzeichnet, dass beim Bremsen unterschiedliche Bremsmomente an den Achsen zur Bremskraftverteilung und/oder an den Rädern einer Achse zur Erzeugung eines Giermoments bzw. Lenkungseingriffs (Torque Vectoring) mittels der Radbremsen (RB1, RB2, RB3, RB4) und/oder den Antriebsmotoren (TM1, TM2) erzeugt werden.
15. Bremssystem nach einem der vorhergehenden Ausführungsbeispiele, dadurch gekennzeichnet, dass die übergeordnete Steuerungseinheit (M-ECU) die Druckversorgungseinrichtungen, Ventile, elektrischen Antriebsmotoren (TM1, TM2) und/oder elektrische Parkierbremse (EMB) bzw. hydraulisch unterstütze Bremse (H-EMB) während des Bremsvorganges und/oder ABS-RegeIbetriebes und/oder zur Diagnose des Bremssystems ansteuert.
16. Bremssystem nach einem der vorhergehenden Ausführungsbeispiele, dadurch gekennzeichnet, dass jeder Druckversorgungseinrichtung (DV1, DV2) mindestens ein Trennventil (TV) zugeordnet ist, wobei durch Verschließen des Trennventils (TV) die Druckversorgungseinrichtung (DV1, DV2), insbesondere bei deren Ausfall, von dem jeweiligen Bremskreis (BK1, BK2) abtrennbar ist, damit bei Ausfall einer Druckversorgungseinrichtung (DV1, DV2) und Übernahme von deren Funktion durch die andere Druckversorgungseinrichtung kein Hydraulikvolumen von der ausgefallenen Druckversorgungseinrichtung aufgenommen wird.
17. Bremssystem nach einem der vorhergehenden Ausführungsbeispiele, dadurch gekennzeichnet, dass mindestens eine ECU einer Druckversorgung (DV-ECU1, DV-EUC2) und eine Ventilanordnung (R-HCU) eine separate Spannungsversorgung und insbesondere Signalübertragung aufweisen, insbesondere alle Module (DV-ECU1, DV-ECU2, R-HCU) durch mindestens zwei Bordnetze (BN1, BN2) versorgt werden und redundante Signalübertragungen (DS1, DS2), insbesondere zur zentralen Steuereinheit (M-ECU), aufweisen.
18. Bremssystem nach einem der vorhergehenden Ausführungsbeispiele, dadurch gekennzeichnet, dass entweder die Druckregelung in einem Bremskreis (BK1, BK2) unter Verwendung mindestens eines Drucksensors und/oder über die Strommessung des Motorstroms des Antriebes und Wegsteuerung des Kolbens und/oder Stromregelung des Antriebes zumindest einer Druckversorgungseinrichtung (DV1, DV2), insbesondere unter Berücksichtigung der Temperatur des Antriebes, erfolgt.
19. Bremssystem nach einem der vorhergehenden Ausführungsbeispiele, dadurch gekennzeichnet, dass das Verbindungsmodul (VM) entweder
   - drei Magnetventile aufweist, über die eine hydraulische Verbindung zwischen einem Bremskreis (BK1, BK2) und dem Vorratsbehälter (VB) oder zwischen den beiden Bremskreisen (BK1, BK2) herstellbar ist
      oder
   - durch einen Kolben-Zylinder-Einheit gebildet ist, deren Kolben einen ersten und einen zweiten Druckraum voneinander trennt, wobei der erste Druckraum mit dem einen Bremskreis (BK1) und der zweite Druckraum mit dem anderen Bremskreis (BK2) in Verbindung ist und der Kolben mittels
   einer Blockiereinrichtung arretierbar ist.
20. Bremssystem nach einem der vorhergehenden Ausführungsbeispiele, dadurch gekennzeichnet, dass das Bremssystem redundante Regel- und Steuereinheiten (ECU, ECU1, ECU2) aufweist, und dass die Antriebe (MI, M2) der Druckversorgungseinrichtungen (DV, DV1, DV2) 2x3 Phasen aufweisen, und dass mittels Sensoren der Motorstrom (i), der Rotor-Winkel (a), insbesondere die Temperatur (T) gemessen und bei der Druckregelung berücksichtigt wird, und dass insbesondere eine redundante Versorgung über zwei Bordnetze (BN1, BN2) bzw. Spannungsniveaus gegeben ist, und dass eine redundante Signalübertragung (DS1, DS2) vorgesehen ist.
21. Bremssystem nach einem der vorhergehenden Ausführungsbeispiele, dadurch gekennzeichnet, dass ein kombinierter Einsatz von Druckversorgungseinrichtungen (DV, DV1, DV2), hydraulisch unterstützter elektromechanischen Bremse(n) (H-EMB), elektrische(n) Parkbremse(n) (EPB) und/oder elektromechanische(n) Bremse(n) (EMB) und/oder Antriebsmotor(en) (TM, TM1, TM2) im Regelbetrieb für einen schnelleren Bremskraftanstieg mit kürzerer Zeit zum Aufbau des Bremsdruckes (Time to Lock - TTL) oder bei Ausfall einer oder mehrerer Komponenten des Bremssystem erfolgt.
22. Bremssystem nach einem der vorhergehenden Ausführungsbeispiele, dadurch gekennzeichnet, dass mindestens eine, insbesondere zwei, Druckversorgungseinrichtung (DV1, DV2), eine Kolben-Zylinder-Einheit aufweist, deren Kolben über ein Getriebe, insbesondere in Form eines Spindelantriebes, von einem elektromotorischen Antrieb (MI, M2) angetrieben ist.
23. Bremssystem nach einem der vorhergehenden Ausführungsbeispiele, dadurch gekennzeichnet, dass mindestens eine Druckversorgungseinrichtung (DV1, DV2), eine Rotationspumpe, insbesondere in Form einer Zahnradpumpe, aufweist, wobei mittels der Rotationspumpe (RP) eine geregelte Volumensteuerung sowohl für den Druckaufbau als auch den Druckabbau vornehmbar ist.
24. Bremssystem nach Ausführungsbeispiel 23 dadurch gekennzeichnet, dass die Rotationspumpe eine Zahnradpumpe (ZRP) ist und einstufig oder mehrstufig ausgebildet ist, wobei mehrere Stufen hydraulisch in Reihe angeordnet sind.
25. Bremssystem nach Ausführungsbeispiel 23 oder 24, dadurch gekennzeichnet, dass die Zahnradpumpe (ZRP) in dem Motorgehäuse des sie antreibenden Motors, insbesondere zumindest teilweise innerhalb dessen Rotors des antreibenden Motors angeordnet bzw. integriert ist.
26. Bremssystem nach einem der Ausführungsbeispiele 23 bis 25, dadurch gekennzeichnet, dass die Rotationspumpe (ZRP), deren Antrieb und Ventile und Druckgeber (DG) in einer Baueinheit, einem Modul bzw. einem Gehäuse zusammengefasst bzw. angeordnet sind und eine Druckversorgungseinrichtung bilden.
27. Bremssystem nach einem der Ausführungsbeispiele 23 bis 26, dadurch gekennzeichnet, dass der Antrieb bzw. Rotor des Antriebs der Rotationspumpe trocken läuft bzw. vom zu fördernden Hydraulikmedium der Rotationspumpe, insbesondere mittels mindestens eine Dichtung von den Hydraulikmedium fördernden Teilen der Rotationspumpe abdichtend getrennt ist.
28. Bremssystem nach einem der vorhergehenden Ausführungsbeispiele, dadurch gekennzeichnet, dass die zentrale Steuereinheit (M-ECU) des Bremssystems zusätzlich auch eine elektrische Servolenkung (EPS) mit steuert.
29. Bremssystem nach einem der vorhergehenden Ausführungsbeispiele, dadurch gekennzeichnet, dass mindestens eine hydraulisch unterstützte elektromechanische Bremse (H-EMB) vorgesehen ist, welche über eine Hydraulikleitung mit einer Druckversorgungseinrichtung (DV1, DV2) verbindbar ist und durch Druckaufbau oder Druckabbau durch die Druckversorgungseinrichtung eine hydraulische Kraft (Fhyd) erzeugt wird, wobei zusätzlich über einen Elektromotor (EM) und ein nicht-hydraulische Getriebevorrichtung (FEM) auf die Radbremse eine Kraft erzeugt wird und beide Kräfte gleichzeitig
   oder unabhängig voneinander auf die Bremsscheibe wirken.
30. Fahrdynamiksystem mit einem Bremssystem nach einem der vorhergehenden Ausführungsbeispiele, dadurch gekennzeichnet, dass das Fahrdynamiksystem mittels des Bremssystems, der elektrischen Antriebsmotoren und einer elektrischen Servolenkung (EPS), insbesondere auch mittels mindestens einer hydraulisch unterstützter Bremse (H-EMB) und/oder mindestens einer elektrischen Parkbremse (EMB), fahrdynamische Regelfunktionen des Fahrzeugs mit seiner übergeordneten zentralen Steuereinheit (M-ECU) steuert.
31. Fahrdynamiksystem nach Ausführungsbeispiel 30, dadurch gekennzeichnet, dass die fahrdynamischen Regelfunktionen die elektrische Bremskraftverstärkung (e-BKV), der ABS-Betrieb, die Stabilitätsregelung (ESP), Rekuperation und Lenkung, insbesondere Lenkeingriffe wie Torque-Vektoring, sind.
32. Fahrzeug mit einem Bremssystem oder einem Fahrdynamiksystem nach einem der vorhergehenden Ausführungsbeispiele.
33. Vorratsbehälter (VB) für ein Bremssystem nach einem der Ausführungsbeispiele 1 bis 29, dadurch gekennzeichnet, dass der Vorratsbehälter mehrere Kammern (KI, K2) aufweist, wobei eine Kammer (K2) des Vorratsbehälters (VB) mit mindestens einer Druckversorgungseinrichtung (DV, DV1, DV2) hydraulisch verbunden bzw. verbindbar ist und/oder eine weitere Kammer (Kl) mit dem Verbindungsmodul (VM) hydraulisch verbunden bzw. verbindbar ist.
34. Verfahren zum Betrieb eines Bremssystems nach einem der Ausführungsbeispiele 1 bis 29 oder eines Fahrdynamiksystems nach einem der Ausführungsbeispiele 30 oder 31, dadurch gekennzeichnet, dass achsweise die Verzögerung der Räder mittels der Druckversorgungseinrichtung(-en), und gleichzeitig mit mindestens einem elektrischen Antriebsmotor (TM1, TM2, TM) erfolgt, wodurch gleichzeitig eine Rekuperation und eine Bremskraftverteilung (EBV) realisiert wird.
35. Verfahren nach Ausführungsbeispiel 34 oder zum Betrieb eines Bremssystems nach einem der Ausführungsbeispiele 1 bis 29 oder eines Fahrdynamiksystems nach einem der Ausführungsbeispiele 30 oder 31, dadurch gekennzeichnet, dass radindividuell die Bremsmomente an den Räder mittels der Druckversorgungseinrichtung(-en) und/oder den elektrischen Antriebsmotoren (TM1, TM2) erzeugt werden, um
   - entweder Giermomente für Lenkungseingriffe unterstützend zur elektrischen Lenkung (EPS) oder im Notfall bei Ausfall der elektrischen Lenkung (EPS) eine Lenkbarkeit des Fahrzeuges sicherzustellen
   - oder um Giermomente für Lenkungseingriffe zu erzeugen, um ein Fahrzeug ohne elektrische Servolenkung (EPS) zu lenken.
36. Verfahren nach Ausführungsbeispiel 34 oder 35 oder zum Betrieb eines Bremssystems nach einem der Ausführungsbeispiele 1 bis 29, dadurch gekennzeichnet, dass Torque-Vectoring mittels der Druckversorgungseinrichtung(-en), dem bzw. den elektrischen Antriebsmotor(en) (TM) und/oder der hydraulisch unterstützten elektromechanischen Bremse (H-EMB) bzw. der elektromechanischen Bremse (EMB), erfolgt.
37. Verfahren nach einem der Ausführungsbeispiele 34 bis 36 oder zum Betrieb eines Bremssystems nach einem der Ausführungsbeispiele 1 bis 29, dadurch gekennzeichnet, dass unter Verwendung eines Temperatursensors die Temperatur (T) des Antriebes ermittelt wird und die Temperatur (T) zur genaueren Ermittlung der Drehmomentmomentkonstante kt verwendet wird, welche durch Temperaturanstieg sich um den Faktor (1 - Br% * ΔT) linear verringert und diese für eine genauere Drehmoment/Druckregelung der Druckversorgungseinrichtung auf Basis des Phasenstromes = kt(T) * Phasenstrom i verwendet wird.
38. Verfahren nach einem der Ausführungsbeispiele 34 bis 37 oder zum Betrieb eines Bremssystems nach einem der Ausführungsbeispiele 1 bis 29, dadurch gekennzeichnet, dass zur Regelung der Fahrstabilität die radindividuellen Regelmöglichkeiten über mindestens eine Druckversorgung (DV1, DV2) und/oder die hydraulisch unterstützte elektromechanische(n) Bremse(n) (H-EMB), und/oder elektrische(n) Parkbremse(n) (EPB) und/oder elektromechanische(n) Bremse(n) (EMB) verwendet werden.
39. Verfahren nach einem der Ausführungsbeispiele 34 bis 38 oder zum Betrieb eines Bremssystems nach einem der Ausführungsbeispiele 1 bis 29, dadurch gekennzeichnet, dass zur Lenkung/Torque Vektoring die radindividuellen Regelmöglichkeiten über mindestens eine Druckversorgungseinrichtung (DV1, DV2), und/oder die hydraulisch unterstützte elektromechanischen) Bremse(n) (H-EMB), und/oder elektrische(n) Parkbremse(n) (EPB) und/oder elektromechanische(n) Bremse(n) (EMB) und/oder mindestens ein Antriebsmotor (TM1, TM2), insbesondere unterstützend, verwendet werden.
40. Verfahren nach einem der Ausführungsbeispiele 34 bis 39 oder zum Betrieb eines Bremssystems nach einem der Ausführungsbeispiele 1 bis 29, dadurch gekennzeichnet, dass die Druckversorgung (DV1, DV2) bei geschlossenem bzw. geschlossenen Trennventil(-en) (TV2, TV1) Fluid aus dem Vorratsbehälter (VB) nachfördert.
41. Verfahren nach einem der Ausführungsbeispiele 34 bis 40 oder zum Betrieb eines Bremssystems nach einem der Ausführungsbeispiele 1 bis 29, dadurch gekennzeichnet, dass die Schaltventile (SV1, SV2) mittels PWM-Verfahren getaktet werden, um unterschiedliche Ventilöffnungsquerschnitte zu realisieren und damit unterschiedliche Druckverläufe an mehreren Radbremsen beim gleichzeitigen Druckaufbau oder Druckabbau über eine Druckversorgungseinrichtung zu realisieren.
42. Verfahren nach einem der Ausführungsbeispiele 34 bis 41 oder zum Betrieb eines Bremssystems nach einem der Ausführungsbeispiele 1 bis 29, dadurch gekennzeichnet, dass die Druckversorgungseinrichtung des Bremssystems keine redundante Steuer- und Regeleinrichtung DV-ECU aufweist, und dass im Fehlerfalle ein Druckaufbau durch den Fahrer mittels der Betätigungseinrichtung (BE) in einem Bremskreis oder zwei Radbremsen erfolgt, wobei ein zusätzliches Verzögerungsmoment mittels des Motors (TM) erzeugt wird, und das optional mindestens eine hydraulisch unterstützte Bremse (H-EMB) zur weiteren Unterstützung der Verzögerung durch Drehmomenterzeugung mittels des Elektromotors der H-EMB vorgesehen wird.

## Patentansprüche

1. Bremssystem für ein Fahrzeug, folgende Komponenten aufweisend:
- mindestens zwei hydraulisch wirkende Radbremsen (RB1, RB2, RB3, RB4),
- mindestens zwei Druckversorgungseinrichtungen (DV1, DV2), die jeweils von einem elektromotorischen Antrieb (M1, M2) angetrieben sind und jeweils eine elektronische Steuer- und Regeleinheit (DV1-ECU, DV2-ECU) aufweisen, wobei optional die mindestens zwei Druckversorgungseinrichtungen (DV1, DV2) in einer Einheit integriert sind, und
- mindestens eine übergeordnete zentrale Steuereinheit (M-ECU), die die einzelnen Steuer- und Regeleinheiten (DV1-ECU, DV2-ECU) der Komponenten des Bremssystems steuert, wobei
- das Bremssystem ferner mindestens einen elektrischen Antriebsmotor (TM1, TM2) zum Antrieb und Abbremsen einer Achse oder eines Rades umfasst, wobei die übergeordnete zentrale Steuereinheit (M-ECU) dazu eingerichtet ist, den elektrischen Antriebsmotor (TM1, TM2) so anzusteuern, dass mittels des Antriebsmotors (TM1, TM2) eine unterstützende Bremskraft erzeugt wird, und/oder
- das Bremssystem ferner mindestens einen elektrischen Antriebsmotor (TM1, TM2) zum Antrieb und Abbremsen einer Achse oder eines Rades umfasst, wobei die übergeordnete zentrale Steuereinheit (M-ECU) dazu eingerichtet ist, den elektrischen Antriebsmotor (TM1, TM2) so anzusteuern, dass bei zumindest teilweisem Ausfall einer Komponente des Bremssystems, etwa einer der Druckversorgungseinrichtungen (DV1, DV2), eine unterstützende Bremskraft mittels des Antriebsmotors (TM1, TM2) erzeugt wird,
und/oder
- die übergeordnete zentrale Steuereinheit (M-ECU) dazu eingerichtet ist, Magnetventile der Druckversorgungseinrichtungen (DV1, DV2) für radindividuelle Bremsmomenteingriffe anzusteuern und/oder eine Lenkung (EPS) mindestens einer Fahrzeugachse anzusteuern,
und/oder
- die übergeordnete zentrale Steuereinheit (M-ECU) dazu eingerichtet ist, eine Dämpfung und/oder eine Wankstabilisierung des Fahrzeuges anzusteuern.

2. Bremssystem gemäß Anspruch 1, **gekennzeichnet durch** eine Betätigungseinheit, die als elektrisches Bremspedal ohne Verbindung mit der Hydraulik des Bremssystems ausgebildet ist.

3. Bremssystem gemäß einem der vorhergehenden Ansprüche, **dadurch gekennzeichnet, dass** die übergeordnete zentrale Steuerungseinheit (M-ECU) dazu eingerichtet ist, beim Bremsen, insbesondere mit Rekuperation, das mittels der Radbremsen (RB1-RB4) zu erzeugende Bremsmoment zu bestimmen und die elektronischen Steuer- und Regeleinheiten (DV1-ECU, DV2-ECU) der Druckversorgungseinrichtungen (DV1, DV2) entsprechend anzusteuern und/oder mindestens einen elektrischen Antriebsmotor (TM1, TM2) zum Aufbau eines zusätzlich zu den von den Radbremsen (RB1-RB4) erzeugten Bremsmomentes anzusteuern beziehungsweise zu verwenden.

4. Bremssystem gemäß einem der vorhergehenden Ansprüche, **dadurch gekennzeichnet, dass** die übergeordnete zentrale Steuerungseinheit (M-ECU) dazu eingerichtet ist, die einzelnen Steuer- und Regeleinheiten (DV1-ECU, DV2-ECU) der Komponenten des Bremssystems so anzusteuern, dass im Regelbetrieb für einen schnelleren Bremskraftanstieg mit kürzerer Zeit zum Aufbau des Bremsdruckes (Time to Lock - TTL) oder bei Ausfall einer oder mehrerer Komponenten des Bremssystem ein kombinierter Einsatz von Druckversorgungseinrichtungen (DV1, DV2), zumindest einer hydraulisch unterstützten elektromechanischen Bremse (H-EMB), zumindest einer elektrischen Parkbremse (EPB) und/oder zumindest einer elektromechanischen Bremse (EMB) und/oder zumindest eines Antriebsmotors (TM1, TM2) erfolgt.

5. Bremssystem gemäß einem der vorhergehenden Ansprüche, **dadurch gekennzeichnet, dass** die übergeordnete zentrale Steuerungseinheit (M-ECU) dazu eingerichtet ist, beim Bremsen mittels der Radbremsen (RB1, RB2, RB3, RB4) und/oder den Antriebsmotoren (TM1, TM2) unterschiedliche Bremsmomente an den Achsen zur Bremskraftverteilung und/oder an den Rädern einer Achse zur Erzeugung eines Giermoments beziehungsweise eines Lenkungseingriffs (Torque Vectoring) zu erzeugen.

6. Bremssystem gemäß einem der vorhergehenden Ansprüche, **dadurch gekennzeichnet, dass** die übergeordnete zentrale Steuereinheit (M-ECU) dazu eingerichtet ist, auch eine elektrische Servolenkung (EPS) zu steuern.

7. Bremssystem gemäß einem der vorhergehenden Ansprüche, **dadurch gekennzeichnet, dass** die übergeordnete zentrale Steuerungseinheit (M-ECU) dazu eingerichtet ist, die einzelnen Steuer- und Regeleinheiten (DV1-ECU, DV2-ECU) der Komponenten des Bremssystems so anzusteuern, dass mittels der Druckversorgungseinrichtungen (DV1, DV2) und/oder mittels mindestens eines elektrischen Antriebsmotors (TM1, TM2) achsweise oder radindividuell Bremsmomente an den Rädern erzeugt werden, um
- Giermomente für Lenkungseingriffe unterstützend zur elektrischen Lenkung (EPS) bereitzustellen oder im Notfall bei Ausfall der elektrischen Lenkung (EPS) eine Lenkbarkeit des Fahrzeugs sicherzustellen, oder
- um Giermomente für Lenkungseingriffe zu erzeugen, um ein Fahrzeug ohne elektrische Servolenkung (EPS) zu lenken.

8. Bremssystem gemäß einem der vorhergehenden Ansprüche, **dadurch gekennzeichnet, dass** die übergeordnete zentrale Steuereinheit (M-ECU) dazu eingerichtet ist, die einzelnen Steuer- und Regeleinheiten (DV1-ECU, DV2-ECU) der Komponenten des Bremssystems so anzusteuern, dass Torque-Vectoring erfolgt mittels zumindest einer der Druckversorgungseinrichtungen (DV1, DV2), mindestens einem elektrischen Antriebsmotor (TM1, TM2) und/oder mindestens einer hydraulisch unterstützten elektromechanischen Bremse (H-EMB) beziehungsweise mindestens einer elektromechanischen Bremse (EMB).

9. Bremssystem gemäß einem der vorhergehenden Ansprüche, **dadurch gekennzeichnet, dass** die übergeordnete zentrale Steuereinheit (M-ECU) dazu eingerichtet ist, die einzelnen Steuer- und Regeleinheiten (DV1-ECU, DV2-ECU) der Komponenten des Bremssystems so anzusteuern, dass für eine Lenkung beziehungsweise für ein Torque Vektoring die radindividuellen Regelmöglichkeiten über mindestens eine Druckversorgungseinrichtung (DV1, DV2) und/oder mindestens eine hydraulisch unterstützte elektromechanische Bremse (H-EMB), und/oder mindestens eine elektrische Parkbremse (EPB) und/oder mindestens eine elektromechanische Bremse (EMB) und/oder mindestens einen Antriebsmotor (TM1, TM2), insbesondere unterstützend, verwendet werden.

10. Fahrdynamiksystem mit einem Bremssystem nach einem der vorhergehenden Ansprüche, **dadurch gekennzeichnet, dass** die übergeordnete zentrale Steuereinheit (M-ECU) dazu eingerichtet ist, mittels des Bremssystems, der elektrischen Antriebsmotoren und einer elektrischen Servolenkung (EPS), insbesondere auch mittels mindestens einer hydraulisch unterstützter Bremse (H-EMB) und/oder mindestens einer elektrischen Parkbremse (EMB), fahrdynamische Regelfunktionen des Fahrzeugs zu steuern.

11. Fahrdynamiksystem nach dem vorhergehenden Anspruch, **dadurch gekennzeichnet, dass** die fahrdynamischen Regelfunktionen die elektrische Bremskraftverstärkung (e-BKV), der ABS-Betrieb, die Stabilitätsregelung (ESP), Rekuperation und Lenkung, insbesondere Lenkeingriffe wie Torque-Vektoring, sind.

12. Von einem elektromotorischen Antrieb (M1, M2) angetriebene Druckversorgungseinrichtung (DV1, DV2) für ein Bremssystem nach einem der Ansprüche 1 bis 9 oder für ein Fahrdynamiksystem nach einem der Ansprüche 10 oder 11.

13. Elektromotor (M1, M2) für eine Druckversorgungseinrichtung (DV1, DV2) für ein Bremssystem nach einem der Ansprüche 1 bis 9 oder für ein Fahrdynamiksystem nach einem der Ansprüche 10 oder 11.

14. Elektronische Steuer- und Regeleinheit (DV1-ECU, DV2-ECU) für eine Druckversorgungseinrichtung (DV1, DV2) für ein Bremssystem nach einem der Ansprüche 1 bis 9 oder für ein Fahrdynamiksystem nach einem der Ansprüche 10 oder 11.

15. Steuereinheit (M-ECU) zur Verwendung als übergeordnete zentrale Steuereinheit (M-ECU) in einem Bremssystem nach einem der Ansprüche 1 bis 9 oder in einem Fahrdynamiksystem nach einem der Ansprüche 10 oder 11.

16. Fahrzeug mit einem Bremssystem oder einem Fahrdynamiksystem nach einem der vorhergehenden Ansprüche.
